# EUROPEAN PATENT SPECIFICATION

(11) **EP 3 314 842 B1**
(45) Date of publication and mention of the grant of the patent: **02.12.2026**
(21) Application number: 15897369.3
(22) Date of filing: 29.07.2015
(51) Int. Cl.: G06F 3/0488, H04W 4/21, H04W 4/12, G06F 15/16, G06F 3/0481, H04L 9/40

(54) **METHOD FOR COMMUNICATING SENSITIVE INCIDENT INFORMATION AND LOCATIONS TO RECEIVERS**
VERFAHREN ZUR ÜBERTRAGUNG SENSIBLER EREIGNISINFORMATIONEN UND ORTE AN EMPFÄNGER
PROCÉDÉ PERMETTANT DE COMMUNIQUER DES INFORMATIONS D'INCIDENT SENSIBLES ET DES EMPLACEMENTS À DES RÉCEPTEURS

(30) Priority: 29.06.2015 US 201514754655
(43) Date of publication of application: 02.05.2018
(73) Proprietor: Bender, T. Gregory, Harrison, NY 10528 (US)
(72) Inventor: Bender, T. Gregory, Harrison, NY 10528 (US)
(74) Representative: Soldatini, Andrea
(86) International application number: PCT/US2015/042688
(87) International publication number: WO 2017/003494

(56) References cited:
- DE-A1- 102009 023 003
- RU-U1- 141 791
- US-A1- 2002 099 824
- US-A1- 2010 191 975
- US-A1- 2012 324 018
- US-A1- 2013 159 836
- US-A1- 2014 081 618
- US-A1- 2014 136 617
- US-A1- 2014 368 601
- US-B1- 8 271 894

## Description

### CROSS-REFERENCE TO RELATED APPLICATIONS

This application claims the benefit of U.S. Nonprovisional Application No. 14/754,655, filed June 29, 2015. U.S. Nonprovisional Application No. 14/754,655 is a continuation-in-part of and claims priority to U.S. Nonprovisional Application No. 13/902,801, filed May 25, 2013, which claims priority to U.S. Provisional Application No. 61/652,099, filed May 25, 2012, and Provisional Application for U.S. Patent No. 61/662,305, filed June 20, 2012.

### BACKGROUND OF THE INVENTION

The present invention relates to a method for sending, receiving, reporting, and/or responding to mood related, time-sensitive, live situation, and/or secretive matter messages, through a one-step submission, and/or Smart Button activation anonymous submit process to authorized receiver(s) via at least one of a communication networks, social media platforms, and/or targeted authorized receipt process, and generating, assigning, and utilizing unique identifiers and corresponding actionable and searchable administrative report generating process. More specifically, the invention relates to a method for permitting submitter(s) to choose the degree of anonymity and/or submit information/content and/or location and send that information/content and/or location, by means of a user interface, text link, and/or Smart Button, or a computer, mobile device, mobile phone, smart pad, electronic device, smart watch, smart glasses, car play and alike, input device, communication device, touchscreen computing device, portable media player, smart device, or tablet to provide an activated application and open a log-in screen to authorized receiver(s) who may access such information/content, which can be encrypted, in whole or in part, and act, report, forward or respond accordingly.

Prompt distribution of live incidents, events, mood related, time-sensitive, and secretive, information is crucial to protection and authorized intervention concerning individual and community safety, and mitigating damage to persons, property and/or infrastructure. The advent of new methods of communication, such as e-mail, cell phones, instant messaging, Smart phones, tablets, computers, text messaging, and other Internet, world wide web, virtual network, and social media compatible devices has increased the ability to effectively communicate such mood related, time-sensitive, and secretive information to authorized individuals. As a result, it is advantageous for a specialized and focused information dissemination system to be adapted to utilize the Internet, virtual network, and/or social media for prompt and effective systems of notification and/or dissemination of sensitive information. Increased utilization of complex smart devices, tablets, mobile devices, associated mobile applications, and mobile icons, as well as, computers, e-mail, texting, instant messaging, and other communication devices and transmission methods can be exploited for their instant notification abilities, and their abilities to relay information back to authorized personnel in time sensitive situations.

A mobile application or mobile app as it is sometimes referred to, is a currently executing computer software application/program that can physically move information from one computer (mobile device) to another host server while it is being executed by the user/submitter. Mobile applications demonstrate many benefits and efficiencies and also immediacy of message/information distribution to an authorized host computer system.

One of the goals of this system is instant distribution of mood related, live incident, time-sensitive, and secretive, information to authorized persons identified by the system. One of the primary goals of this method is to enable persons to come forward with time sensitive and/or secretive information and submit it to authorized persons who can immediately respond to the information submitted. The patent publication US2013/0159836 A1 discloses an anonymous reporting system for use in reporting and following up on incidents, accidents, and the like.

### SUMMARY OF THE INVENTION

The invention is defined in claim 1. Preferred embodiments are set out in the dependent claims.

The present invention is a computer implemented method for at least one submitter to communicate information comprising executing on at least one computer at least one of the following steps of: sending an anonymous communication from at least one submitter, from at least one user-interface of at least one input device, connected to at least one of the Internet, a virtual network, a communication network, social network, world wide web, WAN, and/or LAN, wherein said anonymous communication contains information sent to at least one receiver; generating at least one Unique Identifier for said information; sending the at least one Unique Identifier; matching the targeted receiver to a specific communication and information with a Receiver Unique Identifier; granting the targeted receiver access to communication and information by utilizing the Unique Identifier for said information with the Receiver Unique Identifier; wherein the targeted receiver is permitted to open communication(s), read the communication(s), act on the communication(s), forward the communication(s), respond to the communication(s), reply to the communication(s), and/or delete the communication(s) based on the inputted Receiver Unique Identifier; further comprising a step of the at least one receiver(s) responding to, forwarding, taking an action, and/or making a report based on the communication received from the at least one submitter.

The method can further comprise at least one of the following: whereby the said at least one receiver submitting information to be sent, is a targeted receiver for the said communication; encrypting the information, in part or in whole; decrypting the information, in part or in whole; whereby the information being submitted is encrypted to be sent to the said at least one receiver(s), wherein at least one of the at least one receiver(s) is a targeted receiver for the communication; whereby the communication and or transmission of data is through at least one of text, e-mail, phone, audio, visual, facsimile, instant message, social network transmission, communication, and/or data transmission; whereby the at least one Unique Identifier being generated is associated with the submitted information, in part or in whole; whereby the at least one Unique Identifier and at least one confirmation message is being sent to the said at least one submitter; choosing by the submitter to be identified as being non-anonymous, by submitting submitter or allowing access to related information, comprising their name, e-mail address, phone number, phone text number, network identity code, device identification code or location for non-anonymous communications to the said at least one receiver(s), wherein the submitter related information is stored in at least one data base to be associated with at least one Unique Identifier; whereby the matching of the targeted receiver to a specific communication and information targeted by the submitter is associated with at least one Unique Identifier stored in the database; providing a Receiver Unique Identifier to a host system administration device, system administration device, and/or to the targeted receiver.

The method can additionally comprise: the submitting of the encrypted information and any other information is sent to the said at least one receiver of a plurality of receivers, wherein the said at least one receiver of the plurality of receivers is a targeted receiver for the communication; the sending of the at least one Unique Identifier, and any non-encrypted information or message is to the said at least one receiver of the plurality of receivers;

The method can also be comprised of the submitting of an anonymous location from at least one submitter, from at least one user-interface of at least one input device, connected to at least one of the Internet, a virtual network, a communication network, social network, world wide web, WAN, and/or LAN, wherein said anonymous locator communication contains geographic location information sent to at least one receiver.

The method can also communicate information comprising: sending an anonymous communication from the said at least one submitter, from at least one user-interface of at least one input device, connected to at least one of the Internet, a virtual network, a communication network, social network, world wide web, WAN, and/or LAN, wherein said anonymous communication contains information, wherein the anonymous communication sent from the at least one submitter is inputted utilizing at least one customized standardized template with a drop-down list for selecting at least one recipient; receiving, by the said input device, a selection of the said at least one recipient from the drop-down list within the standardized template; sending the at least one Unique Identifier, and any non-encrypted information or message to the at least one receiver of the plurality of receivers.

The method may also include wherein a customized standardized template drop-down list comprises at least one of the following: recipient, priority level, type of incident, building, location, GPS location or other.

The method can additionally comprise of the steps of the said customized standardized template includes a choice for setting the level of priority that can be assigned to the communication, the level is one of "Urgent", "High", "Medium", "Normal", "Low", or other.

The method further may comprise of wherein the said standardized template includes a drop-down list for selecting a type of communication, said types of communication comprising of at least one of stress, family, issues, harassment, stealing, drugs, bullying, weapons on campus, bomb threats, cheating on schoolwork, cutting/self-injury, cyber bullying, fighting, gang related issues and/or associations, peer pressure, sexual harassment, and/or depression, trafficking, accident, standards, regulations, or other customized type of communication.

The method may further comprise, wherein the said standardized template includes a drop-down list for selecting a types of location, said types of location comprising bus, cafeteria/lunchroom, classroom, hallway, auditorium, gymnasium, locker room, street, sidewalk, playground, bathroom, in town, sports field, Face book, instant messaging, face time, social media, imessage, e-mail, instant message, Twitter, telephone, Skype, IP (internet protocol) address, VoIP (Voice over Internet Protocol), a multimedia message (MMS), YouTube or other customized type of location.

The method may further comprise of, wherein the communication language can be selected by the submitter from a choice of, or drop down window displaying, a selection of a variety of languages to pick from to read and/or communicate in and the at least one receiver through the computer implemented method has the ability to select auto translation of the information.

The method may further comprise of, whereby any information can be submitted or received on at least one of a mobile device, mobile phone, computer, smart pad, electronic device, input device, user-interface, communication device, fax, facsimile machine, phone, voice prompt, tablet, and/or smart device and/or communication sent comprises at least one of the following an image, photo, text, video, film, sound file, sound bites, audio, content file, downloadable content, downloadable file utilizing a Unique Identifier with said message and/or information.

The method may further comprise of the steps of prior to sending an anonymous communication from the at least one submitter, downloading and/or activating an icon on at least one of a computer, mobile device, Mobil phone, smart pad, electronic device, smart watch, smart glasses, car play and alike, input device, communication device, touchscreen computing device, portable media player, smart device, or tablet to provide an activated application and open a log-in screen; inputting a unique code identifier "UCI" on the log-in screen wherein the unique code identifier "UCI" identifies which community the anonymous submitter(s) wants to communicate with or is located in or near; and submitting the UCI to authorized person(s) and/or administrator(s) to disseminate the UCI with-in the community and surrounding areas so the UCI can be utilized by submitter person(s) and/or groups(s) in or near the community for sending anonymous communications to a specified authorized receiver(s) or receiver group(s).

The method may further comprise of, wherein the at least one of a user-interface and/or a input device is comprised of a computer, mobile device, Mobil phone, smart pad, electronic device, smart watch, smart glasses, car play and alike, input device, communication device, touchscreen computing device, portable media player, smart device, tablet, voice prompt, phone, fax, facsimile, a part therein and/or associated software, further comprising the steps of: locating the submitter(s) using a geographic locater, device identifier, and/or global positioning system (GPS); and providing the submitter's location to a host system for submission to receiver(s).

The method may further comprise of, wherein the geographic locater is sending and/or transmitting to/from the submitter's, receiver's, and/or the administrator's mobile device.

The method may further comprise of: downloading, accessing, utilizing and/or activating an application to send, mood related, time sensitive, or secretive information, sending an anonymous communication, said anonymous communication containing information; encrypting the information, in part or in whole; routing the encrypted information and any other information to be sent to at least one receiver; generating at least one Unique Identifier; and sending the at least one Unique Identifier and at least one confirmation message to the at least one submitter, and sending the at least one Unique Identifier, and any non-encrypted information to the at least one receiver.

The method may also further comprise of the steps of: the system receiving at least one selection command, voice activated or other content input or transmission from the submitter; the submitter typing in a message/information and/or selecting a photo/camera function/image/text/film/audio/file/content/sound or video to upload to the system; and the submitter, after sending a submission/communication, receiving a communication comprising a Unique Identifier and a message confirmation.

The invention may be comprised of non-transitory storage device storing a plurality of instructions for at least one message submitter to send in, one-click, one-step, mood related, time sensitive, medical, threatening, or secretive information, wherein said non-transitory storage device comprises a plurality of instructions for: sending an anonymous communication from the said at least one submitter, from at least one user-interface of at least one input device, connected to at least one of an Internet, a virtual network, a social network, a world wide web, WAN, and/or LAN, wherein said anonymous communication contains information; encrypting the information, in part or in whole; submitting the encrypted information and any other information to be sent to at least one receiver of a plurality of receivers; generating at least one Unique Identifier, and sending the at least one Unique Identifier and at least one confirmation message to the at least one submitter, sending the at least one Unique Identifier and any non-encrypted information to the at least one receiver of a plurality of receivers, wherein the instructions further comprise a step, when the submitter chooses to only be identified as being anonymous, the submitter completing the anonymous e-mail address and/or text number entry field in the confirmation message; sending the confirmation message to at least one receiver of the plurality of receivers, wherein the submitter communication is identified as being anonymous; sending, by the at least one receiver of the plurality of receivers, at least one response message anonymously back to the submitter in response to or associated with the at least one Unique Identifier, wherein the at least one receiver of the plurality of receivers is a targeted receiver for the communication; storing the non-encrypted information in at least one database; matching the targeted receiver to a specific communication and information targeted by the submitter associated to at least one Unique Identifier stored in the database; providing a Receiver Unique Identifier to a host system administration device, system administration device and to each receiver; granting the targeted receiver access to the secure communication and information targeted by the submitter for the targeted receiver once the inputted Receiver Unique Identifier is verified; wherein the targeted receiver is permitted to open communication(s), read the communication(s), act on the communication(s), forward the communication(s), respond to the communication(s), reply to the communication(s), and/or delete the communication(s) based on the inputted Receiver Unique Identifier.

The invention may additionally comprise of, wherein the instructions further comprise a step, when the submitter chooses to be identified as being non-anonymous, wherein the submitter may reveal information such as their name, e-mail address, phone number, phone text number, photo, video, audio, mobile or other device identifier, or network identity code or location for non-anonymous communications to the at least one receiver(s) and the information is stored in at least one data base, and the submitter communication is identified as being non-anonymous.

The invention may additionally comprise of: wherein the instructions further comprise a step, wherein at least one of the at least one receiver(s) is a targeted receiver(s) of the communication, and further comprising the steps of: matching at least one targeted receiver to specific communications and information stored in at least one database or other storage device and associated with at least one Unique Identifier; providing a Receiver Unique Identifier to a host system administration device, system administration device, and to each receiver; giving a receiver access to secure communications and information targeted by submitter to them once they input their Receiver Unique Identifier; and permitting the receiver to open communication(s), read the communication(s), act on the communication(s), forward the communication(s), respond to the communication(s), reply to the communication(s), and/or delete the communication(s).

The invention can be comprised of a computer implemented method for reporting at least one live incident in real-time comprising at least one or more of the following steps: accessing a Smart Button area on the display of a computer, mobile device and/or smart device, wherein Smart Button activation is initiated with at least one user interface, mouse click, physically pressing a predefined screen area and/or gesture recognition; submitter optionally enters or edits data, identity information and/or incident information or report; the submitter decides the degree of anonymity to select when accessing/activating use of a smart button from at least one user-interface of at least one input device, connected to at least one of an Internet, a virtual network, a social network, a world wide web, WAN, and/or LAN, said anonymous communication contains information; said activation/accessing of Smart Button causes device to be located and/or automatically enabled to be located employing at least one of GPS, proximity to at least one cell tower, proximity to at least one WiFi and/or other signal, establishing prior known location and/or association with at least one known location; said activation further initiating at least one of the following steps: generating at least one Unique Identifier associated with the submitted incident event and/or information; capturing accessing or generating at least one Unique Identifier for the device sending the incident report; creating, accessing, and/or utilizing at least one Receiver Unique Identifier associated with at least one individual to be contacted; generation of at least one custom incident or event report and location to at least one receiver(s) with at least one Receiver Unique Identifier; accessing, inputting and/or submitting at least one custom standardized template the user can enter and/or select from dropdown menu at least one of their incident or event details, name, e-mail address, phone number, school or organization, photo, audio, video, alias, or other identifying information associated with the user, or take no action or choose to skip; typing a custom message within a data entry field within a template; manually turning on GPS location services if not currently available with one click and/or interaction with a touchscreen; adding user's picture and save and transmit if user does not want to be anonymous; creating reports for at least one administrator and/or authorized receiver(s); notification from submitter to authorized receiver(s) sent via text, email, voice and/or push mobile notification; location of at least one submitter on at least one map.

The method may additionally comprise of, creation, access, utilizing, of a group to be displayed within a drop down menu and/or list comprising at least one authorized person to be contacted.

The method may additionally comprise of, wherein said at least one standardized customized template includes a drop-down list for selecting at least one type of event or incident communication.

The method may additionally comprise of, a step wherein at least one administrator or receiver can view or access a report a map, graph, table will be displayed with the GPS location of at least one submitter.

The method may additionally comprise of, further comprising the emitting of a custom sound, light, vibration to be received and acted upon by receiver.

The method may additionally comprise of, a step whereby the location of at least submitter is tracked using at least one map locator.

The method may additionally comprise of, wherein said at least one standardized customized template includes a drop-down list and/or other selectable switch, button, or interface for at least one submitter sending or displaying Incident Report, Glossary, Help, Notification, Smart Button.

The method may additionally comprise of, said Notification is the receipt through the device of push notifications and other information relating to among other things counseling, time sensitive or goodwill messages to submitter(s).

The method may additionally comprise of, wherby the Anonymous communication(s) are carried forth via at least one of the following: 2-way text-to-cell communication, 2-way voice communication, 2-way Social Media communications, 2-way texting, 2-way phone, 2-way SMS or MMS, 2-way communication, about information, and the 2-way communication is between the sender/submitter(s) and the receiver(s).

The method may additionally comprise of, that the at least one receiver can send at least one response message back to the at least one submitter in response to the unique identifier and related content received by receiver(s) from the submitter(s).

The method may additionally comprise of, wherein the at least one submitter may submit information as at least one message via at least one user-interface using at least one standardized template on at least one of a mobile device, smart pad, electronic device, mobile phone, input device, communication device, tablet, computer, fax, facsimile machine, phone, smart device and/or smart phone

The method may additionally comprise of, wherein the unique identifier is generated using at least one unique algorithm.

The method may additionally comprise of, wherein the instructions further comprise a step, wherein the unique identifier is generated using at least one unique algorithm.

The method may additionally comprise of, wherein said application(s) are native applications specific to the device being used.

The method may additionally comprise of, wherein the at least one submitter may submit information as at least one message via at least one user-interface using at least one standardized template on at least one of a mobile device, smart pad, electronic device, mobile phone, input device, communication device, tablet, computer, fax, facsimile machine, phone, smart device and/or smart phone.

The method may additionally comprise of, wherein the instructions further comprise a step of using at least one customized standardized template(s), wherein the communication being sent from the at least one submitter is input utilizing at least one of the system and method's customized standardized template(s).

The method may additionally comprise of, instructions for having a data base, and icon capable of communicating said submitter message to said data server using unique identifier.

Although preferred embodiments of the present invention have been described it will be understood by those skilled in the art that the present invention should not be limited to the described preferred embodiments. Rather, various changes and modifications can be made within the scope of the invention as defined by the claims.

### BRIEF DESCRIPTION OF THE SEVERAL VIEWS OF THE DRAWING

The drawings constitute a part of this specification and include exemplary embodiments to the invention, which may be embodied in various forms. It is to be understood that in some instances various aspects of the invention may be shown exaggerated or enlarged to facilitate an understanding of the invention.
FIG. 1 is a schematic view of the operation of the system for receiving and responding to mood related or time-sensitive or secretive information, content, and/or messages.
FIG. 2 depicts the flow of creating a new anonymous/non-anonymous mood related or time-sensitive or secretive message for submission.
FIG. 2A - screen shot of photo upload screen, 64 choose file, 59 upload button.
FIG. 2B - screen shot of Selecting the image, depicts the selection of an image or other content or text to upload; 68 selects picture to upload.
FIG. 2C - screen shot of uploading an image.
FIG. 2D - screen shot of cropping an image, with crop button 67, and submit / cancel 61.
FIG. 2E - depicts a smartphone with the Anonymous Alerts Icon. Submitter clicks the mobile application icon to startup/initiate mobile application.

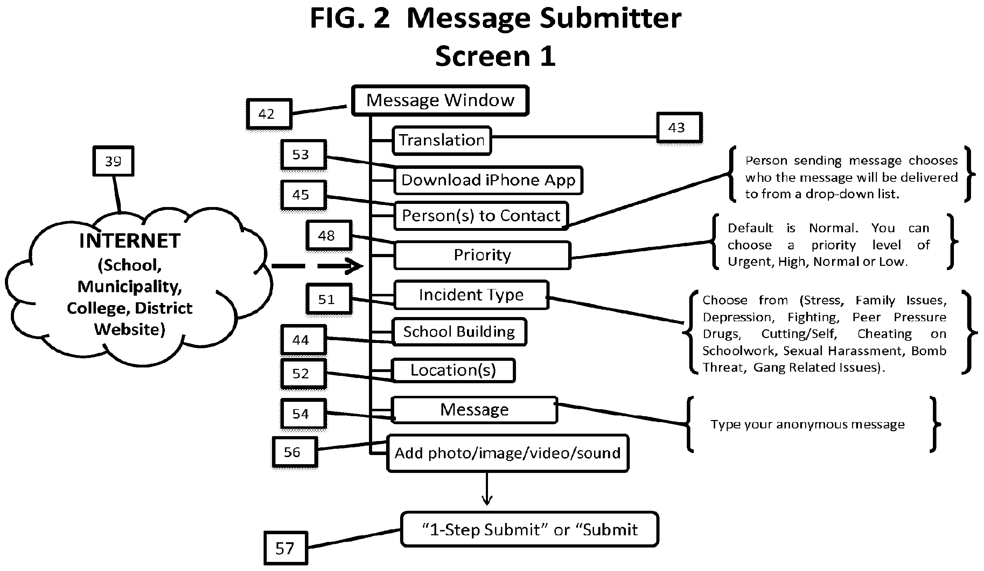

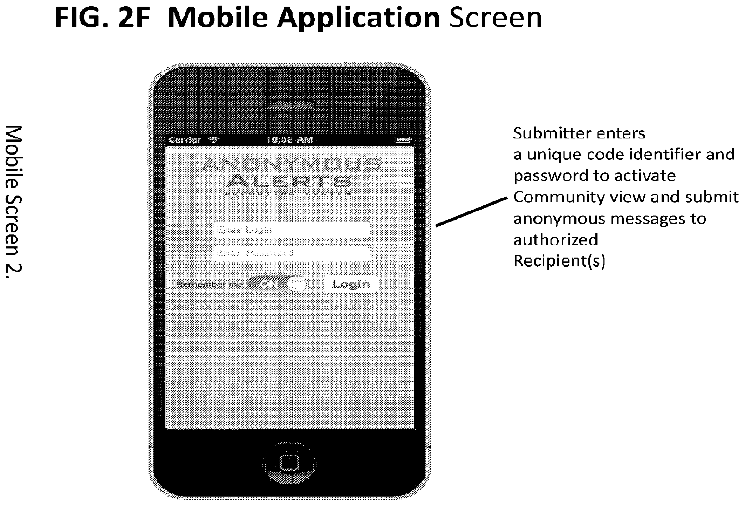

FIG. 2F - depicts the log-in screen of the mobile application for Anonymous Alerts where a Submitter enters a unique Code Identifier "UCI" and password to activate Community View and submit anonymous messages to authorized Receiver(s)/Recipient(s). The Unique Code Identifier "UCI" functions for use in identifying the community and acts as a location finder to quickly identify which community the anonymous submitter wants to communicate with or is located in or near. This UCI is usually submitted to Authorized Persons and/or administrators to disseminate within the community and surrounding areas so the UCI can be utilized by Person(s) and/or Groups(s) in or near the community for sending anonymous communications. The UCI joins together the Submitter with the target Receiver(s). Based on the UCI the submitter is able to send anonymous messages to a specified and authorized Receiver(s) or Receiver group(s). The UCI can determine or establish the permissions for locating a specific community and its location.
FIG. 2G - submitter message submission screen wherein the Submitter chooses to select "Send Incident Report" or "Glossary" to access definition of terms or "Help".
FIG. 2H - submitter message submission screen after the Submitter chooses to select "Send Incident Report", which includes several entry fields, a message field, and submit or send button.
FIG. 2I - submitter message submission screen after the Submitter chooses to select "Send Incident Report" which includes several entry fields and Submitter can select location with a picker that is data driven with custom locations.
FIG. 2J - submitter message submission screen after the Submitter chooses to select "Send Incident Report" which includes several entry fields including an anonymous message screen.
FIGS. 2K and 2L - submitter is prompted to upload an image (upload, or take picture then upload) at the Submitter's discretion if the Submitter has an image to upload about an incident report or other message/ information. Various choice options are shown.
FIG. 2M confirmation screen showing that image or other content has been successfully uploaded.

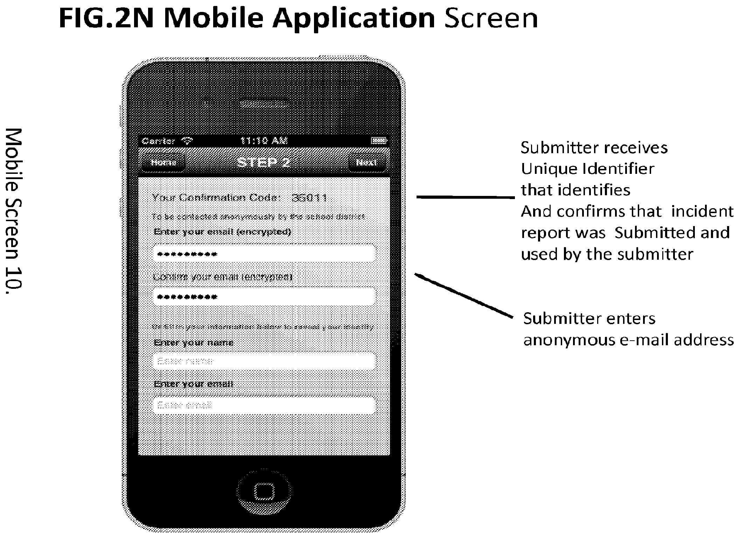

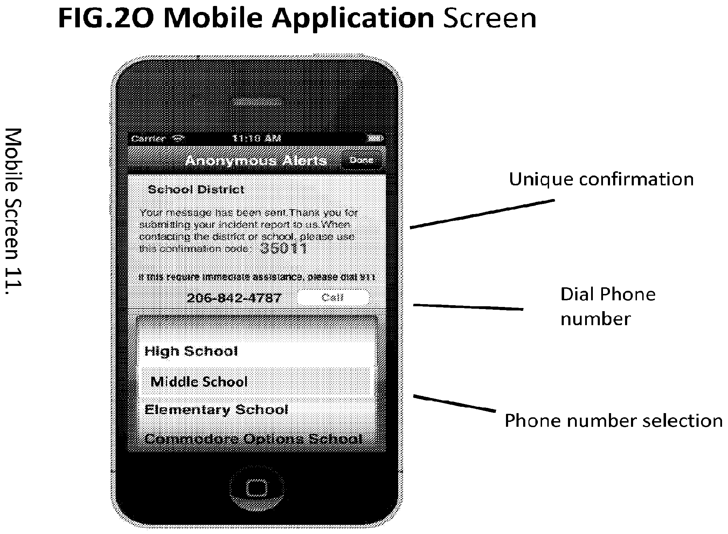

FIGS. 2N and 2O - mobile Application Screens - sending at least one unique identifier and at least one confirmation message to at least one submitter, and sending at least one unique identifier, and any non-encrypted information to at least one receiver. The submitter can choose to remain anonymous, send the anonymous e-mail address and/or text number in the entry field in the confirmation message, then submit this information to be encrypted and stored. Alternatively, the submitter can choose to be non-anonymous, and reveal information such as the Submitter's name, e-mail address, phone number, phone text number or network identity code or location for non-anonymous communications.
FIG. 2P - depicts "Glossary of Terms" screen. Can include community-specific customized terms.
FIG. 2Q - screen for "Definition of Terms" in the drop down menus.
FIG. 2R - help Screen on mobile device.
FIG. 2S - screen Shot of Receiver's smart phone device depicting a message being received from an anonymous Submitter.
FIG. 3 depicts the Message Submitter flow of automated operations that occur following the creation and submission of an anonymous/non-anonymous alert message.
FIG. 4 depicts the flow of an Administrative User's Account Setup process for a message recipient.
FIG. 5 depicts the flow of how a message Receiver or recipient accesses a message from the administrative interface.
FIG. 6A depicts option 1 when viewing new sensitive content message with ability to forward message via e-mail to another party.
FIG. 6B depicts option 2 when viewing new message for Message Recipient to reply to Message Submitter.
FIG. 7 is a screenshot of a system where an Administrator can setup a user account.
FIG. 8 is a screenshot of the possible types of alerts for an anonymous/non-anonymous alert report.
FIG. 9 is a screenshot of system query results that a Message Recipient may search.
FIG. 10 is a screenshot of a message screen containing an original message, related message history, and reply/forwarding options by an administrative user.
FIG. 11 is a screenshot of a reply screen for an administrative user.
FIG. 12 is a screenshot of an example of the Message Submitter's User Interface.
FIG. 13 is a screenshot of an example of the Message Submitter's message type drop-down list options.
FIG. 14 is a screenshot of an example of the Message Submitter's person of contact drop-down selection options.
FIG. 15 is a screenshot of a confirmation that the Message Submitter's submission was received.
FIG. 16 depicts an example of a mobile or smart phone screen having a downloaded application of the method of the invention.
FIG. 17 is an exemplary information handling system in accordance with an embodiment of the present invention.
FIG. 18 depicts some of the Submitter and Receiver elements comprised in an embodiment of the present invention.
FIG. 19 is a system view showing the relationship between Submitter(s) and Receiver(s) and the intervening hardware, further depicting some of the steps performed in an embodiment of the present invention.
FIG. 20 shows Mobile to Mobile Message Sending and Receiving.
FIG. 21 shows a Mobile Phone displaying the Smart Button and anonymous incident reporting and locator mobile application screens.
FIGs. 22-26 show various incident management, administrative, and/or at least 2-way anonymous communications app screens.

### DETAILED DESCRIPTION OF THE INVENTION

Detailed descriptions of particular embodiment are provided herein. It is to be understood, however, that the present invention may be embodied in various forms. Therefore, specific details disclosed herein are not to be interpreted as limiting, but rather as a basis for the claims and as a representative basis for teaching one skilled in the art to employ the present invention in virtually any appropriately detailed system, structure or manner.

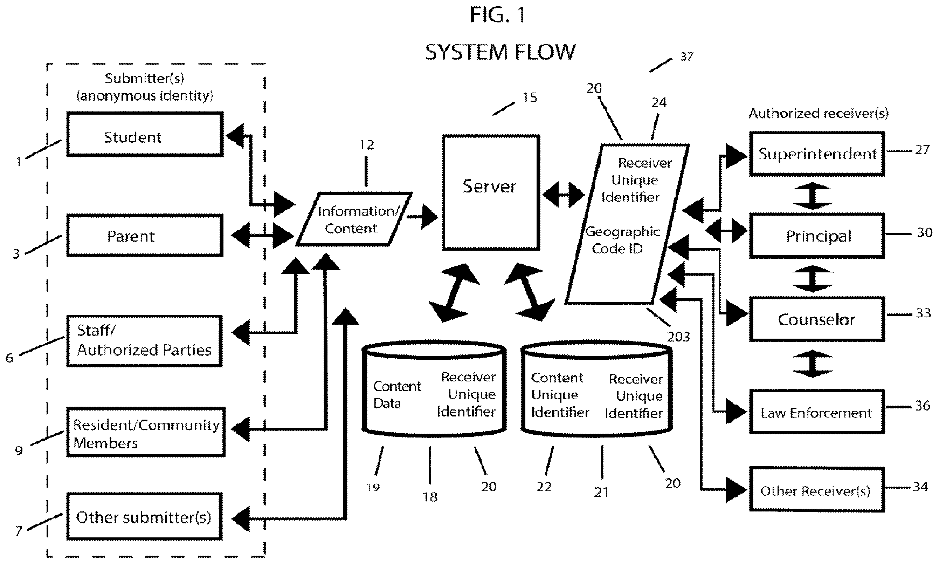

The basic components of the system for receiving and responding to mood related or time-sensitive content matter messages in accordance with the invention are illustrated by FIG. 1. The system 37 includes a server 15 (and 540), that is accessible by Submitter(s) comprising of at least one student(s) 1, parent(s) 3, staff/authorized parties 6, residents/community members 9 of the community, and/or other Submitter(s) 7 via a network that is connected to the Internet, world wide web, any virtual network, a WAN (wide-area network), and/or LAN (local-area network). The server 15 (and 540) is connected to at least one of the databases 18, in conjunction with 21, which uniquely identifies content, messages, identity information, and information / content data 12 and matches the submission to the authorized receiving party(s) designated to receive the submission. The database 18 enables encryption of the identity and/or content data and generates a Content Unique Identifier 22 for the Submitter identifying content so that it is anonymously sent to the intended recipient(s). The system 37 is anchored through the Internet, a virtual network, WAN and/or LAN and is, thus, accessible by personal computer, PDA, tablet, smartphone, mobile device, or other device with Internet, virtual network, WAN, and/or LAN connectivity.

Similarly depicted by FIG.1, the system 37 is also accessible via the Internet, a virtual network, WAN, and/or LAN by authorized person(s)/receiver(s) such as school superintendent 27, principal 30, counselor 33, law enforcement official(s) 36, and/or other receiver(s) 34. Because of the inventive network's use of the Internet, a virtual network, WAN, and/or LAN, this information is accessible to administrators via personal computer, PDA, mobile device, smart phone, tablet, or other device with Internet, a virtual network, WAN, and/or LAN connectivity. As a result of this accessibility, school administrators and other personnel are able to access messages, by log-in using Receiver Unique Identifier 20 which is verified by Host Administration Device 21, to which they are an intended recipient, and communicate with the submitting party, or forward the received message to other parties via e-mail, text, and/or other communication methods.

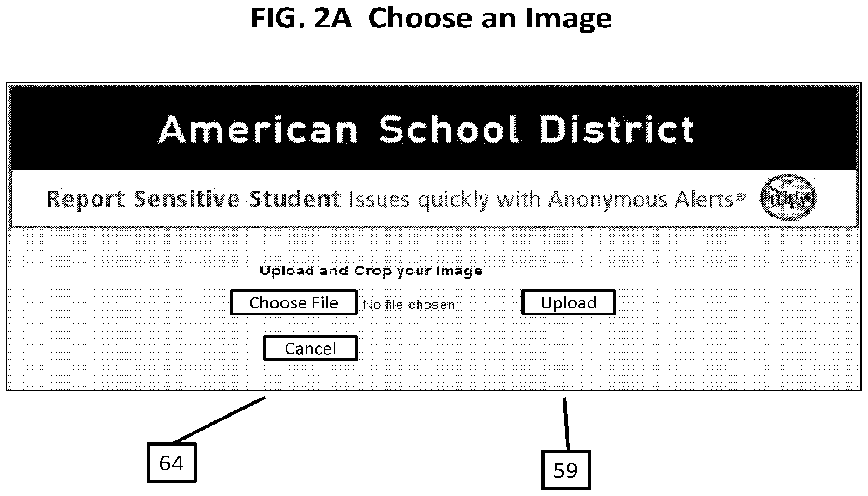

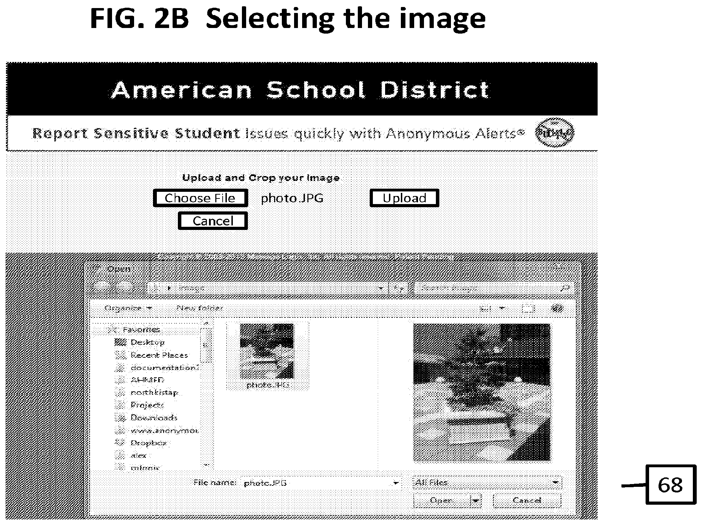

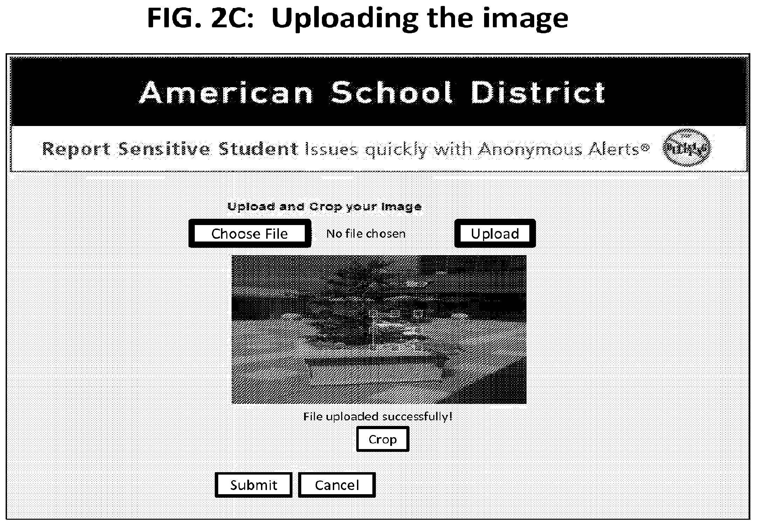

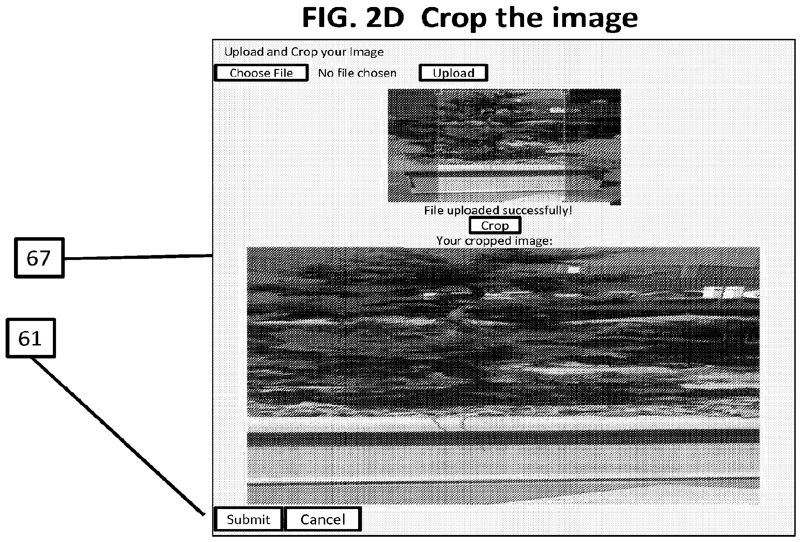

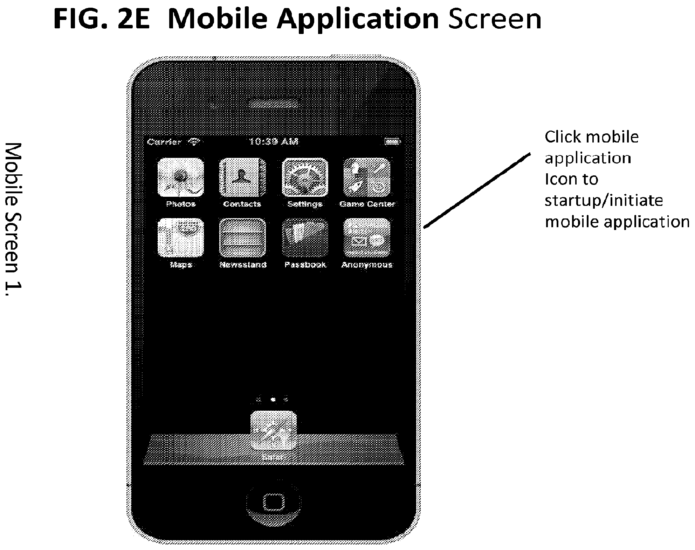

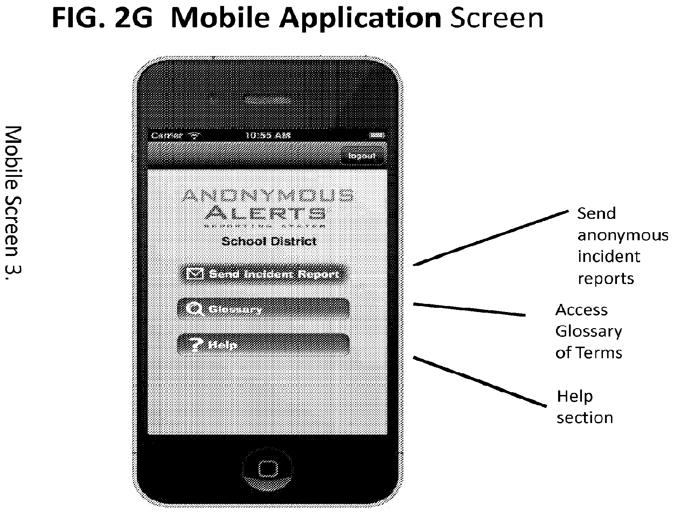

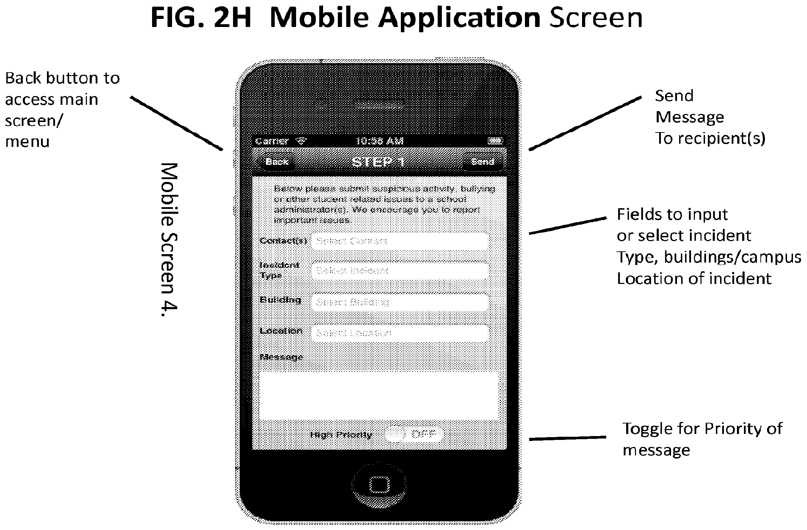

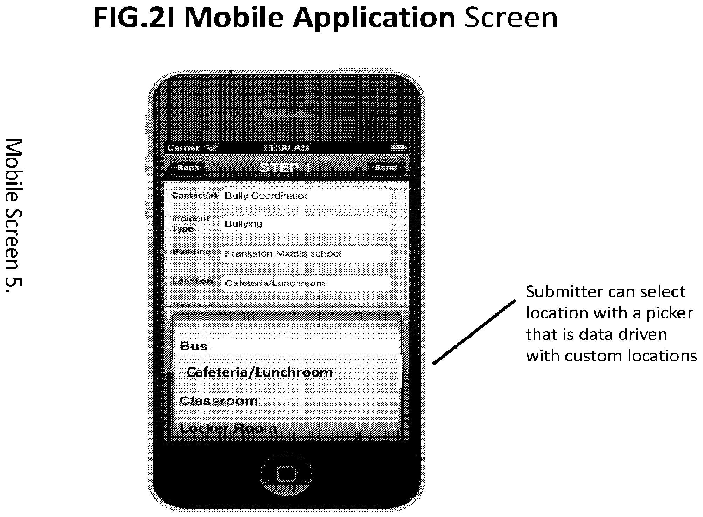

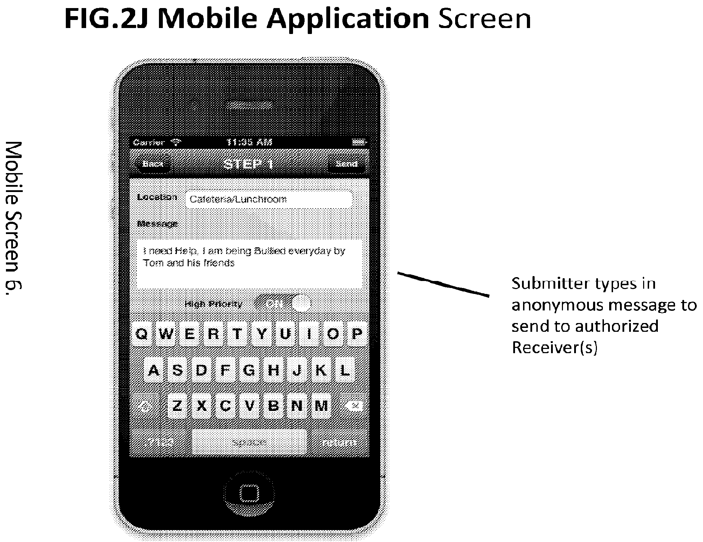

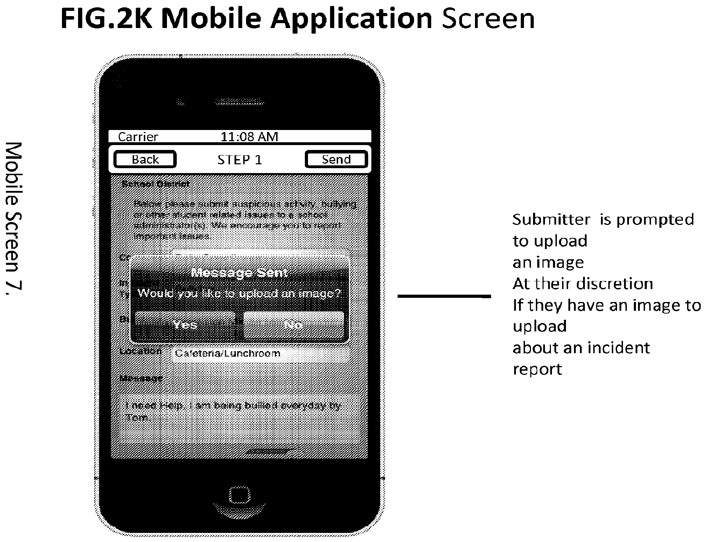

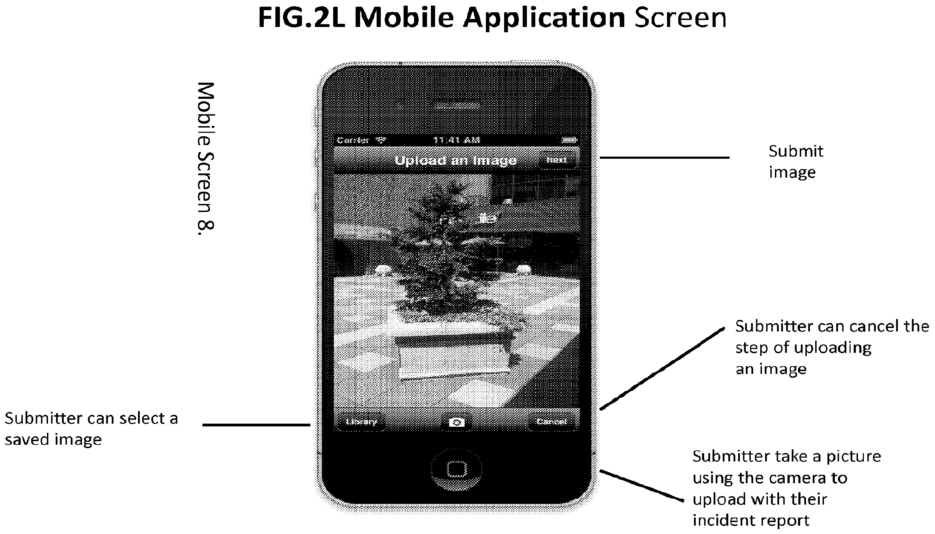

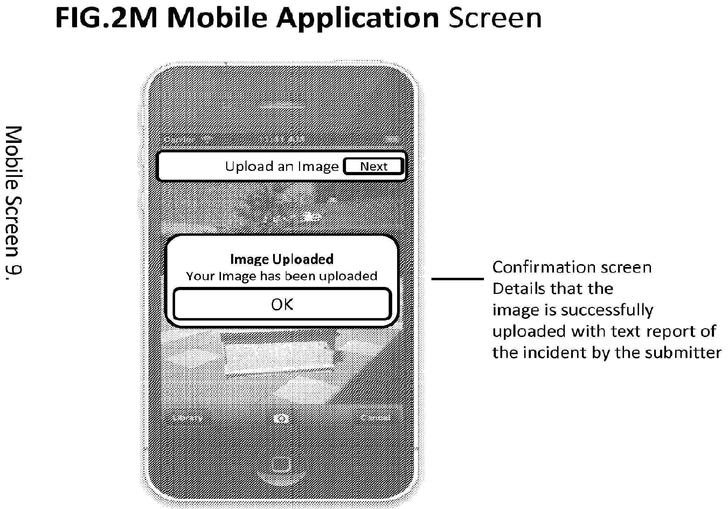

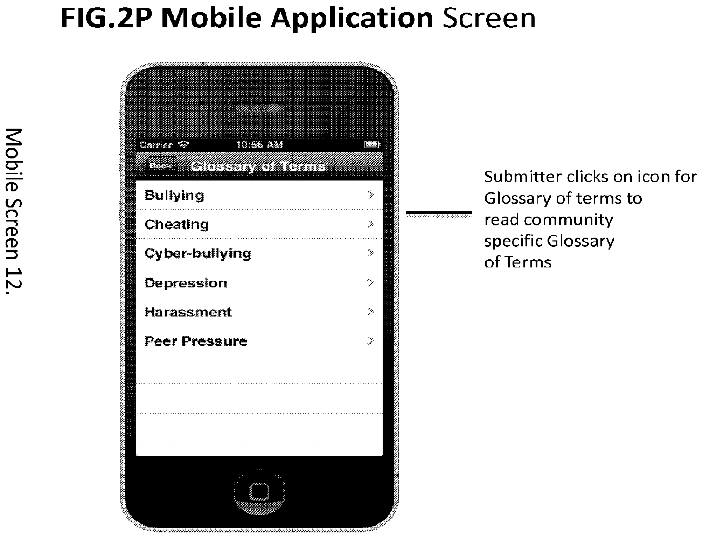

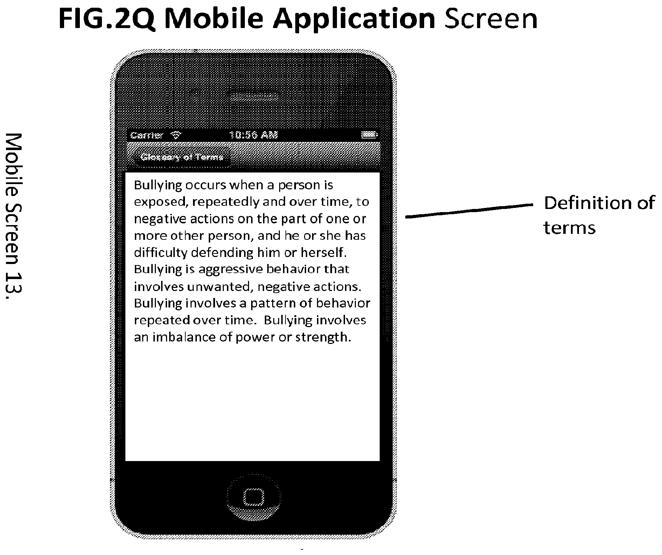

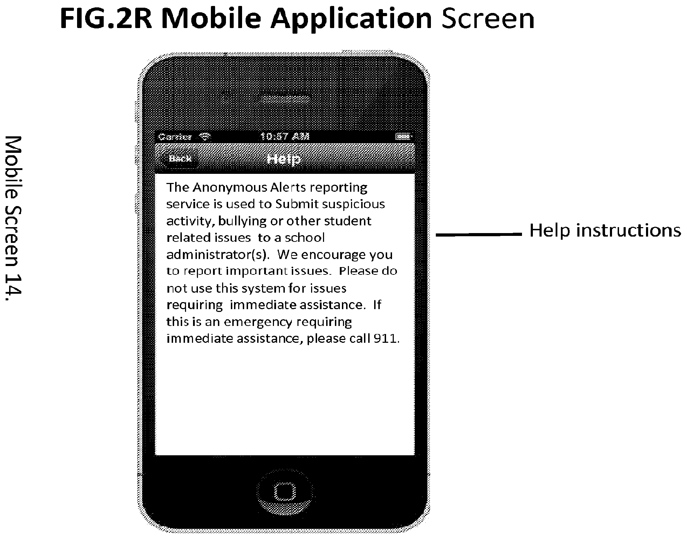

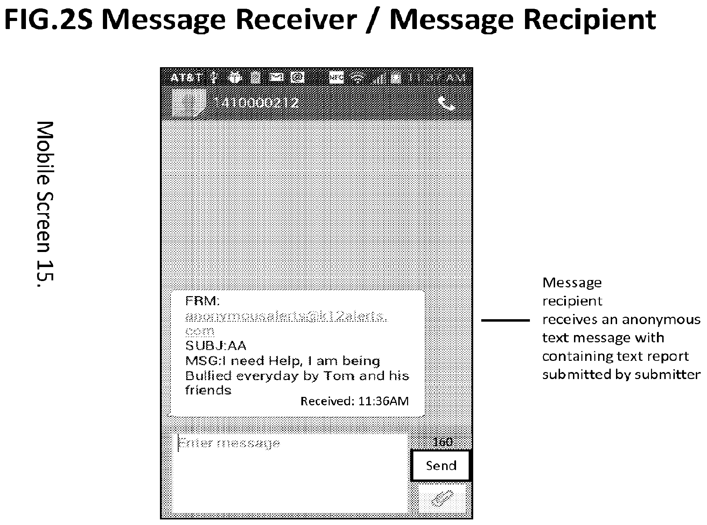

Depicted in FIG.2 is the system's 37 accessibility via the cloud 39 (and 530), which can be any or all of the following: the Internet, a virtual network, social network, world wide web, WAN, and/or LAN.

Referring to FIG. 2, an embodiment of a Message Submitter screen 1 is shown. In the embodiment of FIG. 2, a person who would like to submit a message (" Message Submitter" or "Submitter") may optionally select to download a smart device application by clicking or selecting the application icon located on screen 1, 53, and continue the process from the smart device or continue on screen 1 by first selecting the message window 42 from the designated website or application, optionally selecting from the language choices available 43 (The current default is English), and then will select and identify the Person(s)/receiver(s) to Contact 45 to receive the message from a drop-down menu. The Message Submitter may then select a level of priority 48. While the default level in the current embodiment is set to "Normal", a Submitter may indicate that the content of the message is of "High Priority" or one of the other choices being offered. The Submitter may then select a particular Message Type "incident type" 51, which is the character of the message they are sending from the options provided in the drop-down selection (i.e., Bullying, Peer pressure, bomb threat, other school threat, etc.). Submitter also may choose School building type 44, and location there within 52, and a Message Submitter will type a free-form message 54. This embodiment allows for a free-form message. Then the submitter may select a request by checking the box or other indication to add other content to the submission comprising images, text, photos, video, film, sound bites, or other content 56. Lastly, the Submitter would click the graphic icon "1-Step Submit" 57 to submit the message to the receiving and/or corresponding party via a one-click submission process.

Figures 2A - D are screen shots dealing with selecting and manipulating images to be sent. The Message Submitter if desired can alternatively and choose at least one file, 64, (FIG. 2B Choice screen appears for selecting) than select to upload or cancel 59, at least one photo or other content/data from a computer, tablet, smartphone, etc. with or without text. Additionally, the photo can be uploaded from an app, a library, or a photo taken by a phone, tablet or similar device, with the submission comprising images, text, photos, video, film, sound bites, or other content. FIG. 2D shows the ability to make adjustments such as cropping 67 to the selected content prior to submission. To submit, select Submit 61.

FIG. 2E - Depicts a smartphone with the Anonymous Alerts Icon. Submitter clicks the mobile application icon to startup/initiate mobile application.

FIG. 2F - Depicts the log-in screen of the mobile application for Anonymous Alerts where a Submitter enters a unique Code Identifier "UCI" and password to activate Community View and submit anonymous messages to authorized Receiver(s)/Recipient(s). The Unique Code Identifier "UCI" functions for use in identifying the community and acts as a location finder to quickly identify which community the anonymous submitter wants to communicate with or is located in or near. This UCI is usually submitted to Authorized Persons and/or administrators to disseminate within the community and surrounding areas so the UCI can be utilized by Person(s) and/or Groups(s) in or near the community for sending anonymous communications. The UCI joins together the Submitter with the target Receiver(s). Based on the UCI the submitter is able to send anonymous messages to a specified and authorized Receiver(s) or Receiver group(s). The UCI can determine or establish the permissions for locating a specific community and its location.

FIG. 2G shows the Submitter message submission screen wherein the Submitter chooses to select "Send Incident Report" or "Glossary" to access definition of terms or "Help".

FIG. 2H shows the Submitter message submission screen after the Submitter chooses to select "Send Incident Report" which includes several entry fields, message field, and submit or send button.

FIG. 2I shows the Submitter message submission screen after the Submitter chooses to select "Send Incident Report" which includes several entry fields and Submitter can select location with a picker that is data driven with custom locations.

FIG. 2J shows the Submitter message submission screen after the Submitter chooses to select "Send Incident Report" which includes several entry fields including an anonymous message screen.

FIGS. 2K and 2L show how the Submitter is prompted to upload an image (upload, or take picture then upload) at the Submitter's discretion if the Submitter has an image to upload about an incident report or other message/ information. Various choice options are shown.

FIG. 2M shows a confirmation screen showing that image or other content has been successfully uploaded.

FIGS. 2N and 2O show Mobile Application Screens, sending at least one unique identifier and at least one confirmation message to at least one submitter, and sending at least one unique identifier, and any non-encrypted information to at least one receiver. The submitter can choose to remain anonymous, send the anonymous e-mail address and/or text number in the entry field in the confirmation message, then submit this information to be encrypted and stored. Alternatively, the submitter can choose to be non-anonymous, and reveal information such as the Submitter's name, e-mail address, phone number, phone text number or network identity code or location for non-anonymous communications.

FIG. 2P depicts a "Glossary of Terms" screen. This can include community-specific customized terms.

FIG. 2Q shows the screen for "Definition of Terms" in the drop down menus.

FIG. 2R shows a help screen on mobile device.

FIG. 2S shows a screen shot of Receiver's smart phone device depicting a message being received from an anonymous Submitter.

After activating an icon on at least one of a computer, mobile device, smart device, or tablet the Submitter enters in a login screen of the application, information including a unique code identifier "UCI". The Unique Code Identifier "UCI" functions for use in identifying the community and acts as a location finder to quickly identify which community the anonymous submitter wants to communicate with or is located in or near. This UCI is usually submitted to Authorized Persons and/or administrators to disseminate within the community and surrounding areas so the UCI can be utilized by Person(s) and/or Groups(s) in or near the community for sending anonymous communications. The UCI joins together the Submitter with the target Receiver(s). Based on the UCI the submitter is able to send anonymous messages to a specified and authorized Receiver(s) or Receiver group(s). The UCI can determine or establish the permissions for locating a specific community and its location.

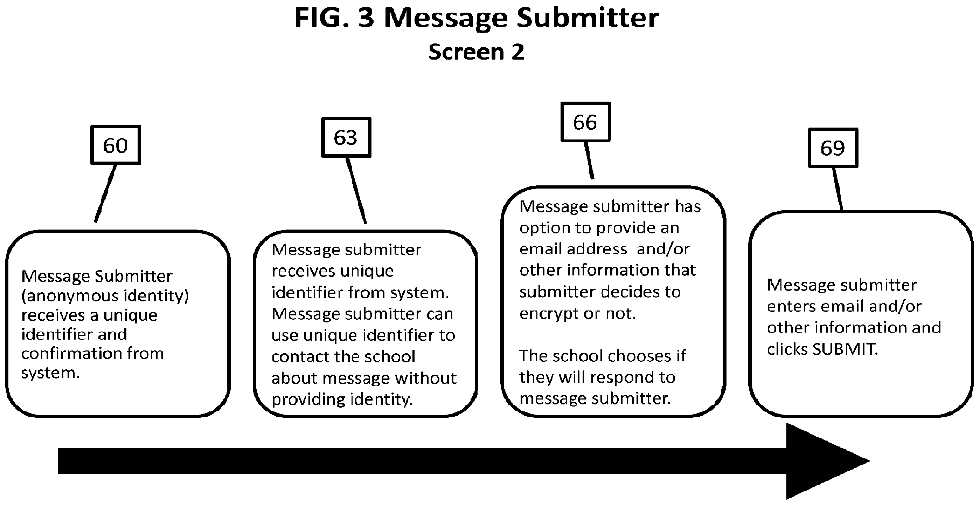

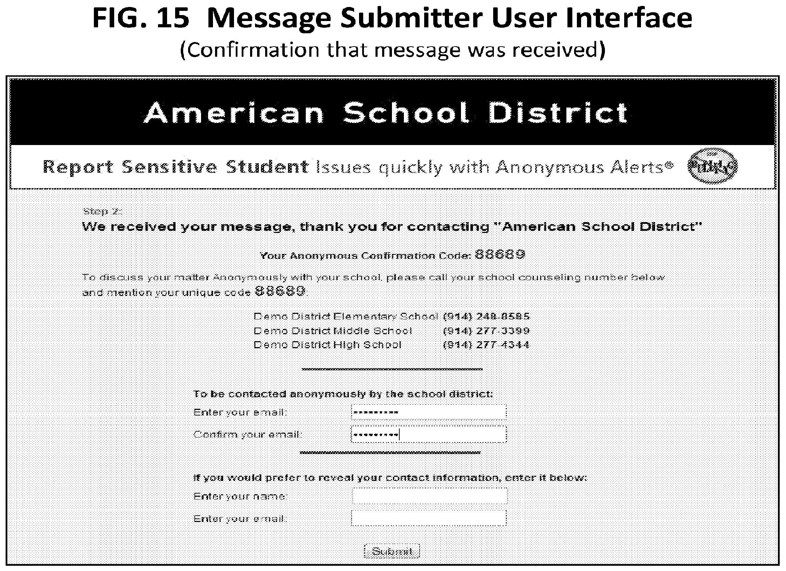

As shown in FIG. 3, once a Message Submitter has submitted an alert via the "1-Step Submit" 57 process shown in FIG. 2, the Submitter will receive a notification note and confirmation 60 from the system 37. The system 37 will also generate a unique identifier 63 as depicted by the screenshot in FIG. 15 (the current preferred mode is 5 digits, but any number of digits, letters, symbols or combinations thereof can be used). This unique identifier can be used when contacting the school via telephone or any other transmission method in order to reference the message that was submitted without revealing the Submitter's identity. The system will also permit the Message Submitter to provide an e-mail to which the school may choose to reply 66. The system will automatically encrypt the e-mail address submitted to the school in order to maintain the Submitter's anonymity. Should the Message Submitter elect to be non-anonymous and provide an e-mail and/or other details, the Submitter simply enters the address and/or other information in the non-anonymous section and clicks "submit" 69. The system can guarantee no IP (internet protocol) address tracking for additional security for a group or community that chooses or prefers the highest level of anonymous protection or the method can provide IP addresses as part of the process or when a direct threat has been launched through the system 37. The system 37 can guarantee no IP (internet protocol) address and no VoIP (Voice over Internet Protocol) tracking for additional security for a group or community that chooses or prefers the highest level of anonymous protection or the method can provide IP and/or VoIP addresses as part of the process or when a direct threat has been launched through the system.

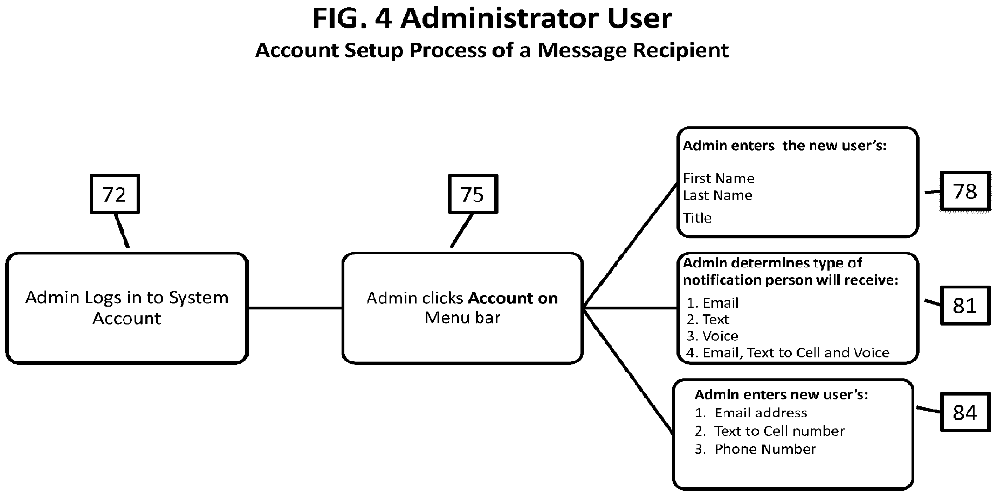

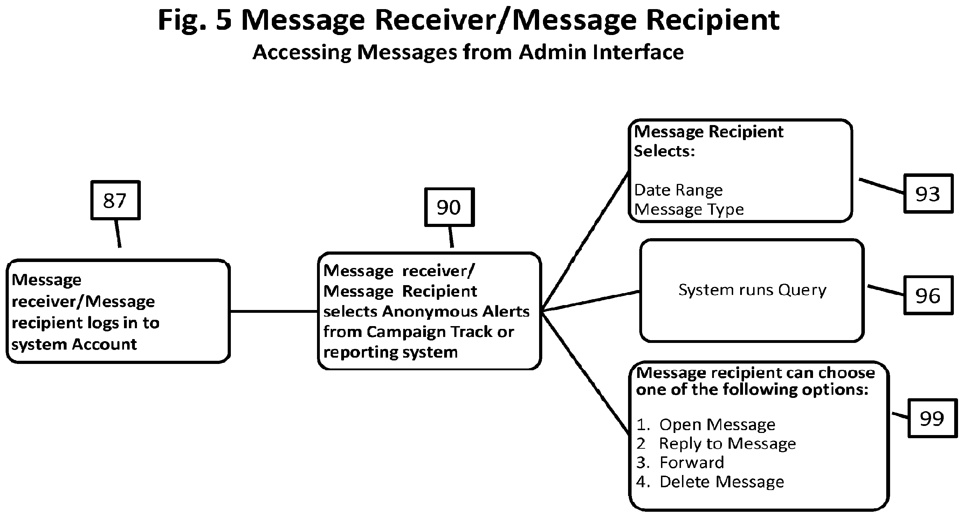

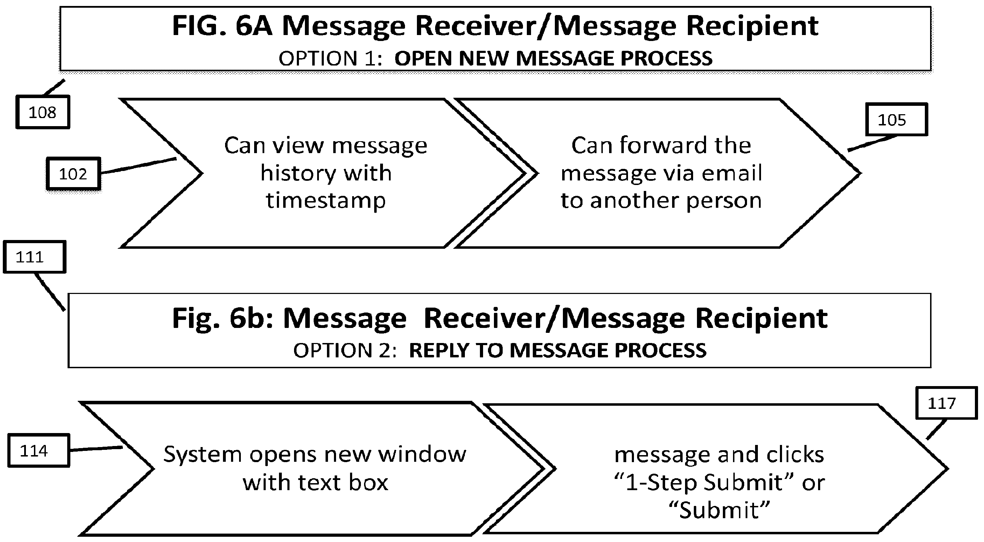

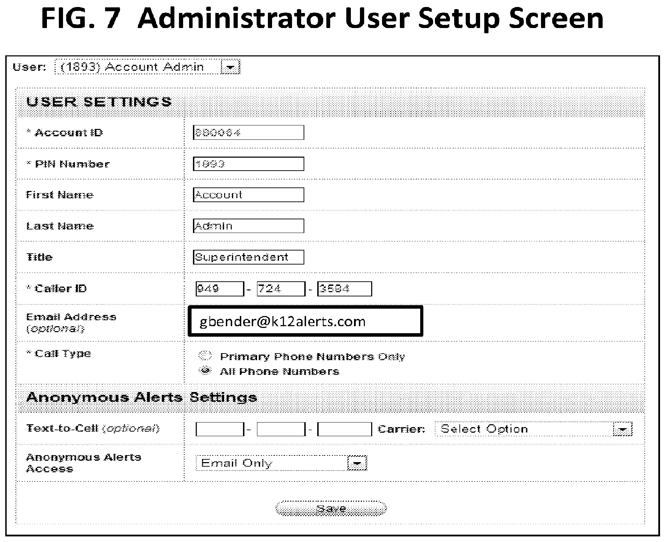

As described in FIG. 4 and depicted in the screenshot of FIG. 7, a system administrator (admin) 550 must first create an account for a content Message Recipient (i.e.,: receiver/Authorized party). Thus, the admin 550 must first log into the system to access the admin's account, such access to the admin's account can be through use of a mobile or other smart device application by selecting the icon located on the mobile and/or smart device, or login screen 72, or can be through any of a computer, smartphone, mobile phone, mobile device, Internet accessible device. To create a new account, an admin 550 selects the "Account" option on the menu bar 75 and fills in the requisite information, comprising first and last name of the new user 78, may enter title, the type of notification the admin 550 may wish to receive from the system 37 (e-mail, text, voice, instant message, reports only, social media notification or all) 81, and the new user's corresponding contact information including e-mail addresses, and any relevant phone numbers 84. Once an account has been created, a Message Recipient (Receiver) can access anonymous/non-anonymous alert messages by logging into the system Account 87 as described in FIG. 5. From here, the user can run a query for anonymous/non-anonymous alerts from the Campaign Track or reporting system on a menu 90, and identify a date range, and message type 93. The system will run the query 96 and the Recipient/admin 550 user can select to either 1) Open message, 2) Reply to message, 3) Forward message, or 4) Delete message, all options depicted in 99. Should the user choose to open a new message 108 as shown in FIG. 6A, the user will be able to access that particular message, as well as view its message history with time stamped information 102, as depicted in FIG. 6A. The receiver may also elect to forward a message via e-mail to another party 105 before or after opening the message. Should the Receiver choose to reply to a message 111, the system 37 will open a new window 114 and permit a response to the Submitter. The response is then submitted through a "1-Step Submit" or "Submit" (one-click submit) process 117. The method and system of the invention thus allows for an unlimited number of recipients/Receivers to instantly receive information on mood related, time sensitive or secretive, medical, and/or threatening issues.

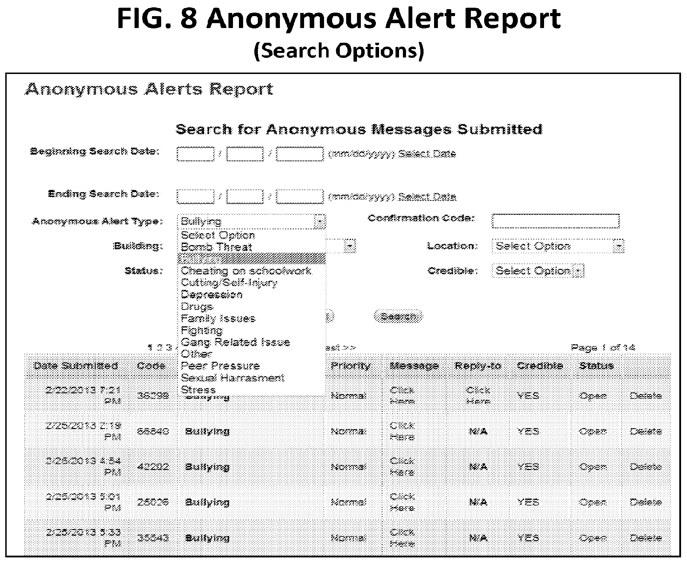

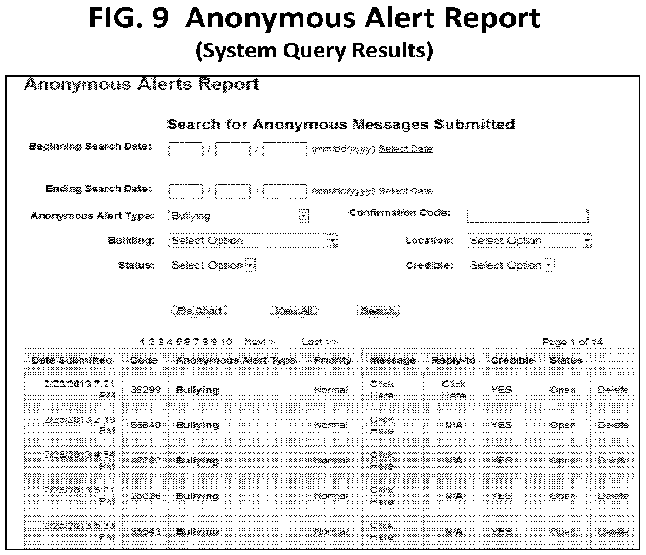

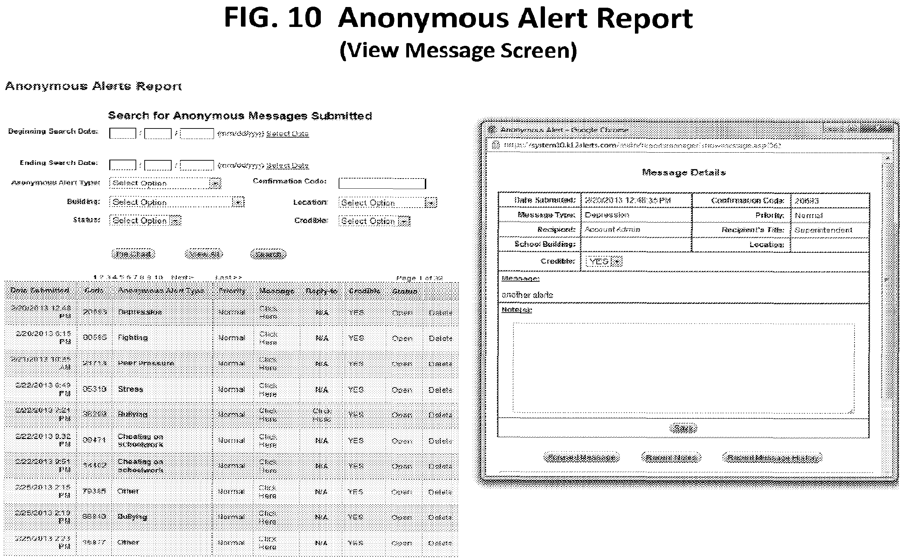

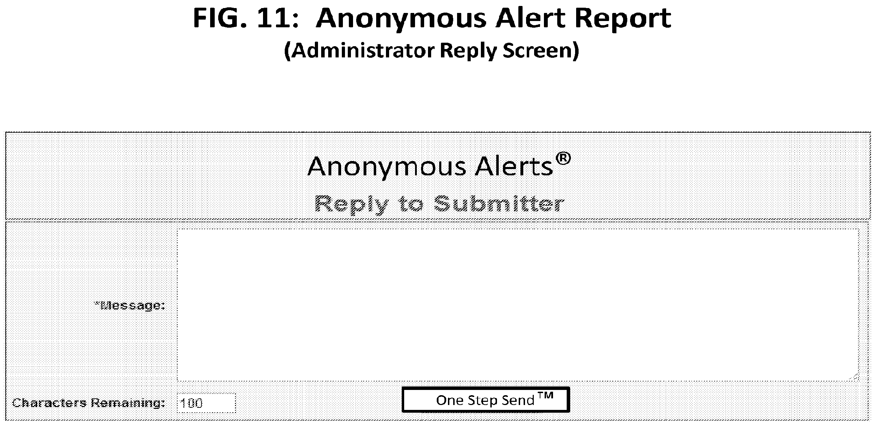

Referring to FIGS. 8-11, a Receiver who would like to view message content of various types, or those submitted during a particular time period, may do so through the system's 37 search options. FIG. 8 shows both the system's 37 date limitation options for a search query, as well as its options to refine a search by content message type through category selections available in the drop-down list provided. Once a query has yielded a set of results, (see FIG. 9) a user may select any particular message and its history and either read, reply, delete, or forward the information to another party. The results can also be displayed in a graphical pie chart format. FIG. 10 is a screenshot of a message screen containing an original message, related message history, and reply/forwarding options by an administrative user. FIG. 11 is a screenshot of a reply screen for an administrative user.

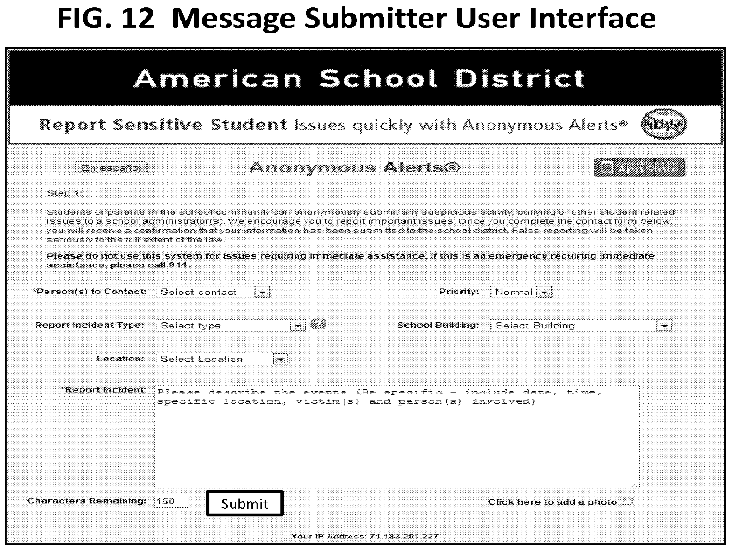

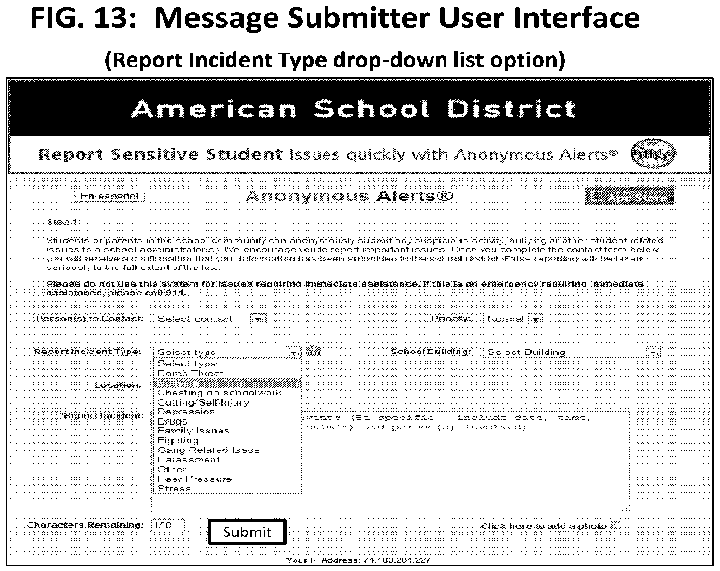

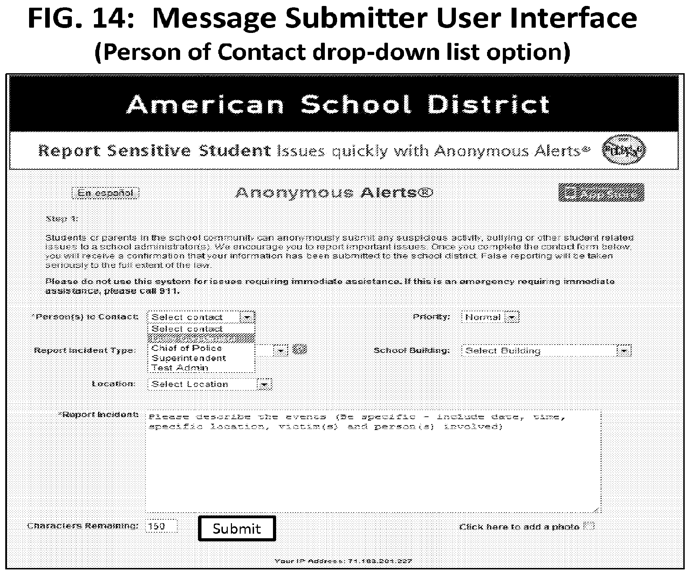

To submit a new anonymous/non-anonymous alert, a Message Submitter (or Submitter) must do so through the user interface or mobile application used in connection with the user interface. The template, as depicted in FIG. 12, has been simplified to include two required fields from drop-down lists: the Person of Contact field (FIG. 14), and the Message Type field (FIG. 13). The third field provides space for the body of the message. A character count is provided in the lower left hand corner of the template to increase the ease of use of the template. Once a message alert has been successfully submitted, the Submitter will automatically receive a notice confirming the submission. As depicted in FIG. 15, the confirmation notice includes an anonymous ID number as well as a corresponding telephone number should the Submitter wish to follow up on the Submitter's submission. Should the Submitter seek a response, the Submitter may also elect to provide an e-mail address or text number, which can be automatically encrypted by the system 37 in order to maintain the Submitter's anonymity, if desired.

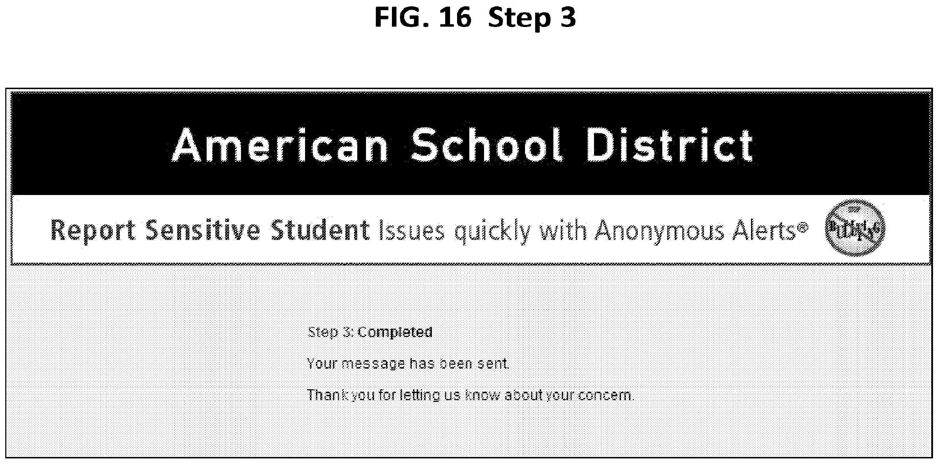

FIG. 16 depicts an example of a mobile or smart phone screen having a downloaded application of the method of the invention.

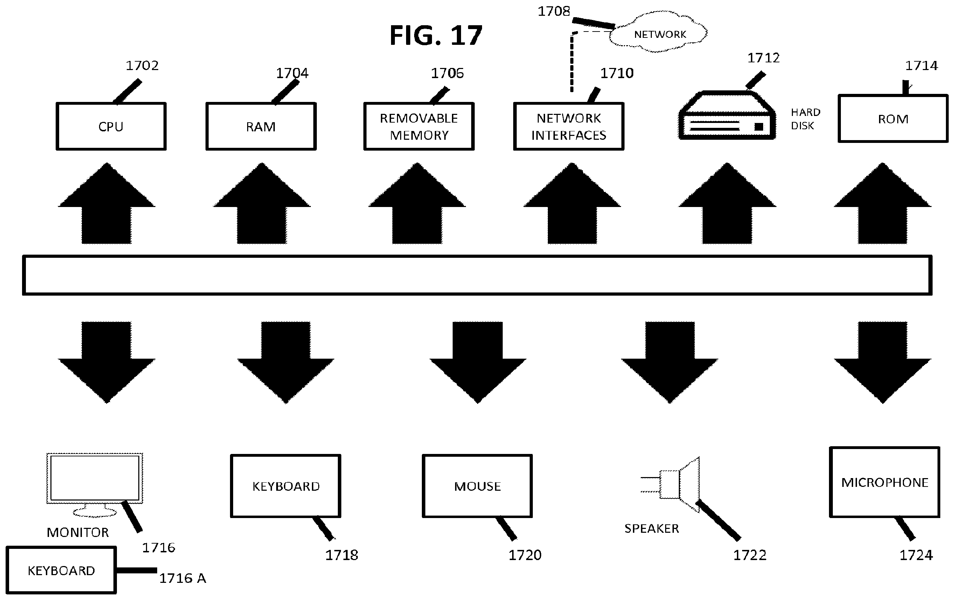

FIG. 17 depicts an illustrated a block diagram of an exemplary information handling system. The information handling system comprises a bus that connects (either directly, or in combination with another bus) a Central Processing Unit (CPU, or processor) 1702 to RAM 1704, hard disc 1712, ROM 1714, and input/output devices. Additionally, the bus can have an interface for receiving removable memory 1706. Removable memory can include but is not limited to an optical disc, a memory card, or a "boot" drive. Additionally, the bus can connect the CPU 1702 to network interface(s) 1710. The network interface(s) 1710 can either physically or wirelessly connect the information handling system to one or more networks 1708, such as, but not limited to, the internet, WAN, and/or LAN, the Public System Telephone Network, a cellular telephone network, or a cellular data network, .

Some inputs can include a mouse 1720, a keyboard 1718, and a microphone 1724. The output devices can include a screen 1716 and speaker(s) 1722. In certain embodiments, the screen 1716 can be heat or touch sensitive so as to project a visual keyboard 1716A for receiving inputs, thus not requiring a keyboard 1718 or mouse 1720.

According to certain embodiments of the present invention, the invention incorporates a plurality of instructions that are executable by the CPU 1702, residing in any combination of RAM 1704, Removable Memory 1706, hard disc 1712, or ROM 1714. Additionally, the instructions can reside at a node on the network. It will be understood that storage of said instructions in the node, RAM 1704, Removable Memory 1706, hard disc 1712, or ROM 1714 changes the foregoing, chemically, electrically, and/or electromagnetically.

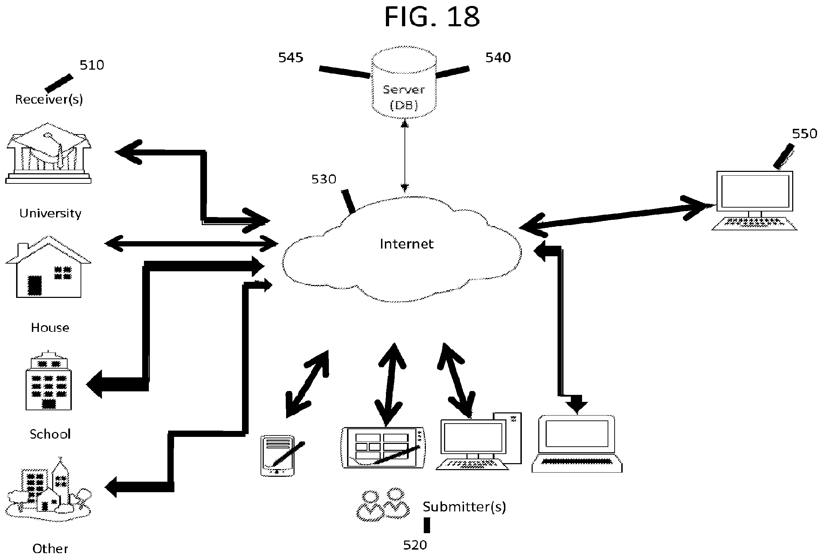

FIG. 18 depicts a typical system 37 enabling bi-directional connection via the cloud 530 (and 39) (which can be comprised of one of more of the following: the internet, a virtual network, social network, world wide web, WAN, and/or LAN) of a collection of Submitters 520 using devices such as a smart phone, tablet, computer, and laptop with a collection of Receivers 510 who are authorized persons located in places such as universities, houses, schools, and other places, and their bi-directional communication is enabled by at least one server 15 (and 540) housed in the host system for storing information in a data base 545 such as data identity, unique identifiers and other information used by the system administrator 550 as might be implemented in the present invention.

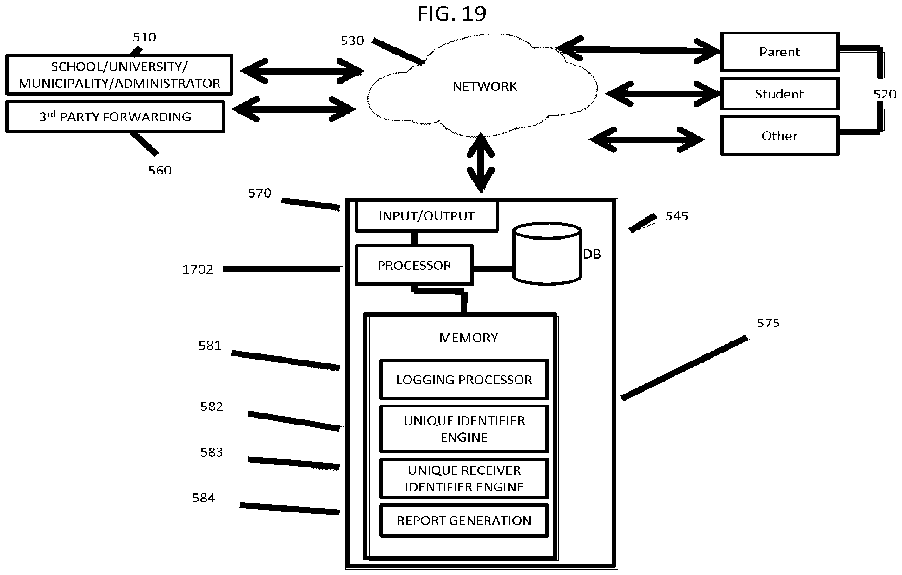

FIG. 19 is a system view showing the relationship within a cloud 530 (and 39) (which can be comprised of one of more of the following: the internet, a virtual network, social network, world wide web, WAN, and/or LAN) between Submitter(s) 520 which could consist of a parent 3, student 1, or other 7 and Receiver(s) 510 which could consist of a school, university, municipality, administrator, or 3rd party forwarding 560. In the server 15 (and 540) is depicted the input/output devices 570, processor 1702, data base 545, and collective memory 575 in which runs the logging processor 581, unique identifier engine 582, unique receiver identifier engine 583, and report generation 584. The logging processor 581 is unique login software that works in connection with the input devices and interfaces to set up communication between Receivers, Submitters, third parties, and administrators. The unique identifier engine 582 is unique software that generates Unique Identifier(s) using unique algorithms. The unique receiver identifier engine 583 utilizes unique software to generate a Receiver Unique Identifier. The report generator 584 is unique software designed to create unique reporting, charts, tables, lists, statistics, and/or data compilations about alerts and other information received and generated.

It is noted that community members can quickly submit content and information through a variety of transmission options (i.e., computer, fax, phone, smartphone, mobile phone, mobile device, smart device, Internet accessible device) to identified and selected parties who are authorized to respond and confront the issue(s) presented by the sensitive content of the message. The content selection screen is divided into fast and easy sections comprising person of contact, message priority, message type and message. Additionally, submission is advantageously reduced to a simplified, one-step process that creates ease of use for the members of the community for their submission of quick, immediate, and actionable content and code(s). The system can generate immediate feedback once a submission has been successfully sent, providing a code number identifying the particular claim(s) for reference purposes without compromising the anonymity of the Message Submitter. Encryption of the Sender ID can create a level of comfort in the anonymity it offers community members, students, parents, staff, and various community-member users. The content submitter can then choose to reveal their identity anytime thereafter. Additionally, the authorized Receiver(s) of the anonymous messages can have the option to furnish the individual Submitter with a response(s), forward the information to additional parties, and/or forward the information to subject matter experts.

The member transmission option can be to a download smart device application set to receive a particular group code which can insure the submitted content and information is routed to the selected group authorized and designated responder(s).

Additionally, the system can guarantee no IP tracking for additional security for a group or community that chooses or prefers the highest level of anonymous protection, or the method can provide IP addresses as part of the process or when a direct threat has been launched through the system.

Prior to sending an anonymous communication from at least one Submitter, Submitter may activate an icon on at least one of a computer, mobile device, smart device, or tablet. The Submitter can enter in log in screen of the application, information including a unique code identifier. After activating an icon on at least one of a computer, mobile device, smart device, or tablet, the Submitter can enter in a login screen of the application, information including a unique code identifier "UCI". The Unique Code Identifier "UCI" functions for use in identifying the community and act as a location finder to quickly identify which community the anonymous Submitter wants to communicate with or is located in or near. This UCI is usually submitted to Authorized Persons and/or administrators to disseminate within the community and surrounding areas so the UCI can be utilized by Person(s) and/or Groups(s) in or near the community for sending anonymous communications. The UCI joins together the Submitter with the target Receiver(s). Based on the UCI the submitter is able to send anonymous messages to a specified authorized Receiver(s) or Receiver group(s). The UCI can determine or establish the permissions for locating a specific community and its location.

Submitter can utilize the activated application to send, mood related, time sensitive, or secretive information, sending an anonymous communication, said anonymous communication containing information, encrypting the information, in part or in whole, routing the encrypted information and any other information to be sent to at least one Receiver, generating at least one unique identifier, and sending at least one unique identifier and at least one confirmation message to at least one submitter, and sending at least one unique identifier, and any non-encrypted information to at least one receiver. Submitter can receive a selection command from the Submitter/user, and said Submitter/user can type in a message and/or select a photo/image/sound or video to upload to the system receiving a unique identifier with message confirmation.

The Submitter can receive a selection command from the Submitter/user by clicking on an icon, and this icon appears on a user screen and enables the Submitter/user to type in a message and/or select a photo/image/sound or video to upload to the system receiving a unique identifier with message confirmation.

The user screen can be a mobile user device. The invention can include a data server, wherein an icon enables communication between a Submitter message and the data server using a unique identifier, and Submitter can be using a search module which is capable of searching the database.

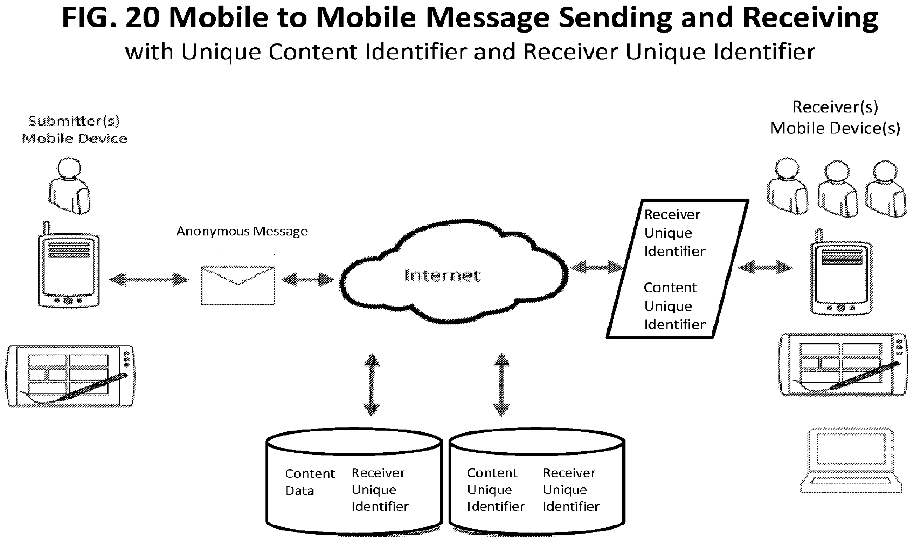

FIG. 20 - Depicted by FIG.20, A Mobile to Mobile Message Sending and Receiving - The system includes a server 15 (and 540), that is accessible by Submitter(s) comprising of at least one student(s) 1, parent(s) 3, staff/authorized parties 6, residents/community members 9 of the community, and/or other Submitter(s) 7 via a network that is connected to the Internet, world wide web, any virtual network, a WAN (wide-area network), and/or LAN (local-area network). The server 15 (and 540) is connected to at least one of the databases 18, in conjunction with 21, which uniquely identifies content, messages, identity information, and information / content data 12 and matches the submission to the authorized receiving party(s) designated to receive the submission. The database 18 enables encryption of the identity and/or content data and generates a Content Unique Identifier 22 for the Submitter identifying content so that it is anonymously sent to the intended recipient(s). The system 37 is anchored through the Internet, a virtual network, WAN and/or LAN and is, thus, accessible by PDA, tablet, smartphone, mobile device, or other device with Internet, virtual network, WAN, and/or LAN connectivity.

Also via the Internet, a virtual network, WAN, and/or LAN by authorized person(s)/receiver(s) such as school superintendent 27, principal 30, counselor 33, law enforcement official(s) 36, and/or other receiver(s) 34. Because of the inventive network's use of the Internet, a virtual network, WAN, and/or LAN, this information is accessible to administrators via PDA, mobile device, smart phone, tablet, or other mobile device with Internet, a virtual network, WAN, and/or LAN connectivity. As a result of this accessibility, school administrators and other personnel are able to access messages, by log-in using Receiver Unique Identifier 20 which is verified by Host Administration Device 21, to which they are an intended recipient, and communicate with the submitting party, or forward the received message to other parties via e-mail, text, and/or other communication methods.

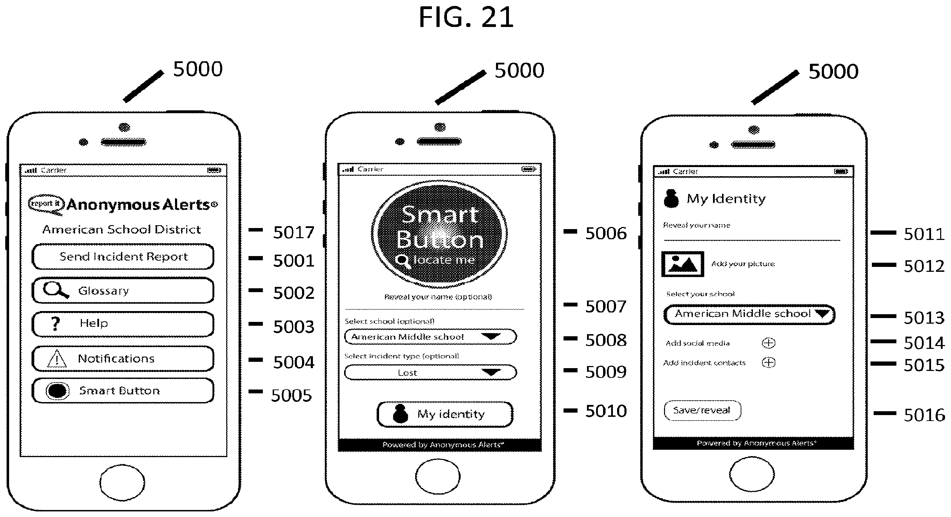

FIG. 21 - A Mobile Phone 5000 with a space located at the top of the screen that can have a name/logo 2017, including a custom name, organization name, company name, nickname, custom text, symbols, shapes, icons, buttons, touch sensitive areas and/or custom logo, among other things utilizing and/or accessing UCI. The Mobile Phone with 5000 displaying top center button is for sending an incident utilizing a UCI. 5002 displaying glossary button is for a custom glossary of terms utilizing a UCI. 5003 displaying help button is for a custom help section utilizing a UCI. 5004 displaying notifications button is for accessing a school good will or time sensitive notifications utilizing and/or accessing UCI. 5005 displaying the Smart button is for a smart button section utilizing a UCI. 5006 displaying the Smart button screen for the submitter to report their anonymous or non-anonymous location utilizing a UCI. 5007 displaying the reveal your name area to type in your name if the submitter does not want to remain anonymous utilizing a UCI. 5008 displaying a pull-down menu and/or selection menu to say the school or organization that the submitter belongs to or is associated with. 5009 displaying a pull-down menu and/or selection menu for the submitter to select what type of incident type for their report. 5010 displaying a My Identity button to click on if they do not want to be anonymous. 5011 with an entry field for the submitter to type in their name or nickname. 5012 displaying a picture icon and/or clickable text for the submitter to add a their photo to not be anonymous. 5013 displaying a pull-down menu and/or selection menu to say the school or organization that the submitter belongs to or is associated with. 5014 displaying social media with a plus sign to add their personal social media sites to send notifications if they want to be non-anonymous. 5015 displaying incident contacts with a plus sign to add their personal incident report contacts to send notifications if they want to be non-anonymous. 5016 displaying a save/reveal button and/or text to save their information for reports utilizing a UCI.

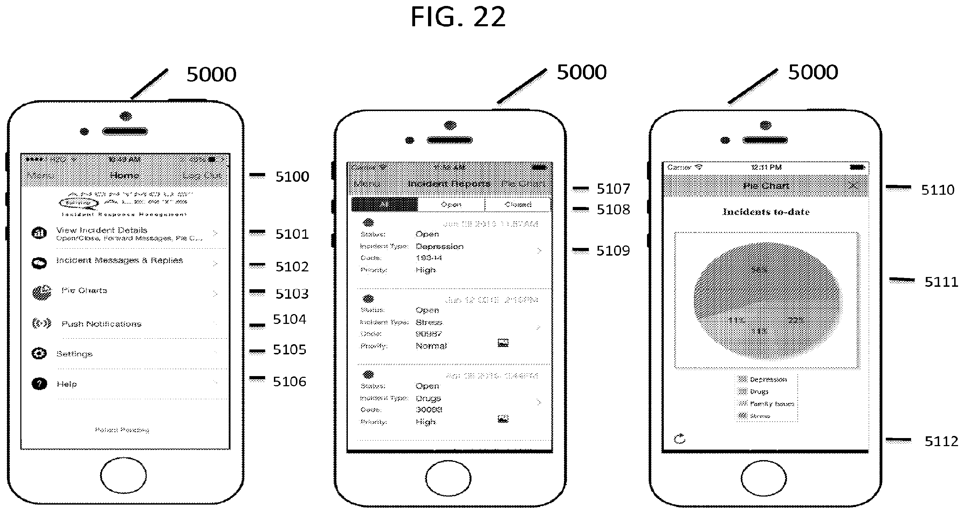

FIG. 22 shows three screens of an app appearing on a Mobile Phone 5000. The first of the three app screens depicted in FIG. 22 shows buttons for logging the user out of the app 5100, viewing incident details submitted by the users 5101, viewing incident messages & replies submitted 5102, viewing Pie Charts related to incidents or location 5103, accessing Push Notification Features 5104, accessing user settings 5105, and accessing Help/Instruction about the app 5106. The second of the three app screens depicted in FIG. 22 shows buttons for displaying Pie Charts related to incidents or location 5107, filtering reports based on status (e.g., All, Open or Close) 5108, and shows a clickable screen for briefly describing the incident 5109. The third of the three app screens depicted in FIG. 22 shows buttons for closing the presented screen 5110 and refreshing the screen 5112, and shows a screen area for displaying the pie chart 5111.

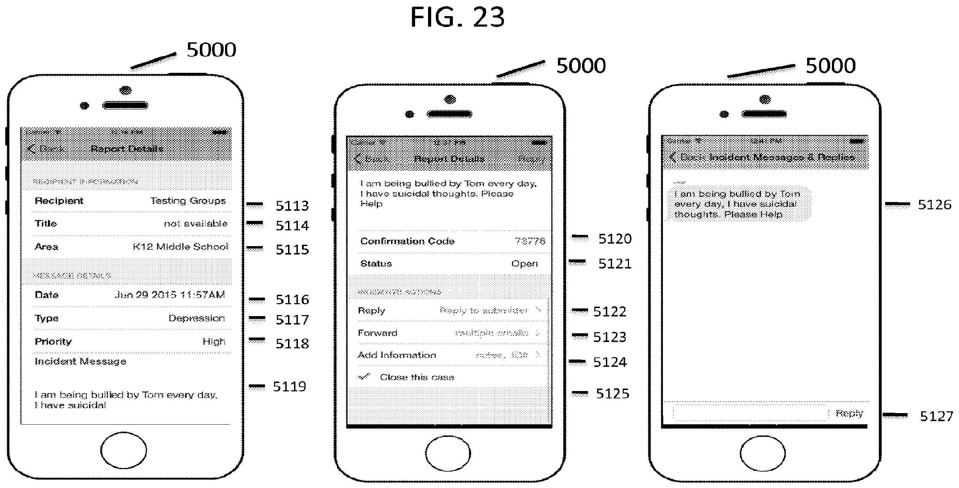

FIG. 23 shows three screens of an app appearing on a Mobile Phone 5000. The first of the three app screens depicted in FIG. 23 shows screen areas for displaying the recipient name 5113, the title of the recipient 5114, the name of the building/area where the incident occurred 5115, the date of the incident 5116, the type of the incident 5117, the incident priority 5118, and the incident message 5119. The second of the three app screens depicted in FIG. 23 shows screen areas for displaying the confirmation code 5120 and the status of the incident 5121, and buttons for replying to the person who submitted the incident message 5122, forwarding the incident report via email 5123, adding more information (e.g., notes or Student ID numbers) of person involved with the submitted incident 5124, closing the case of the submitted incident report 5125, and sending the reply of the message submitted. The third of the three app screens depicted in FIG. 23 shows a screen area for displaying the incident messages and replies 5126 and a button for replying to the incident messages and replies 5127.

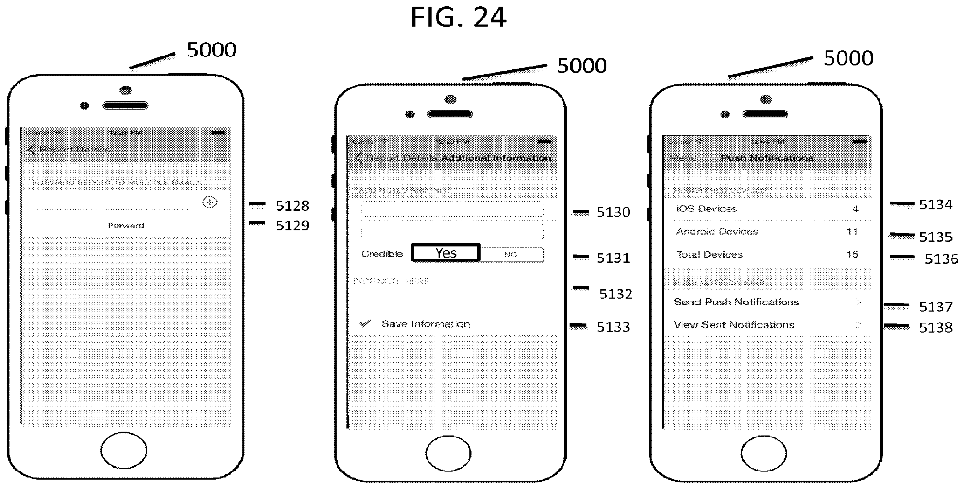

FIG. 24 shows three screens of an app appearing on a Mobile Phone 5000. The first of the three app screens depicted in FIG. 24 shows buttons for adding email addresses 5128 and forwarding the report to the email addresses added 5129. The second of the three app screens depicted in FIG. 24 shows text fields for adding the name of a person involved with the submitted incident 5130, and adding notes related to the submitted incident 5132, and shows buttons for describing credibility of the submitted incident 5131 and saving notes 5133. The third of the three app screens depicted in FIG. 24 shows screen areas for displaying the number of iOS devices registered for push notifications 5134, the number of Android devices registered for push notifications 5135, and the total number of registered devices registered for push notifications 5136, and shows buttons for accessing the features of sending push notifications 5137 and accessing the report of sent push notifications 5138.

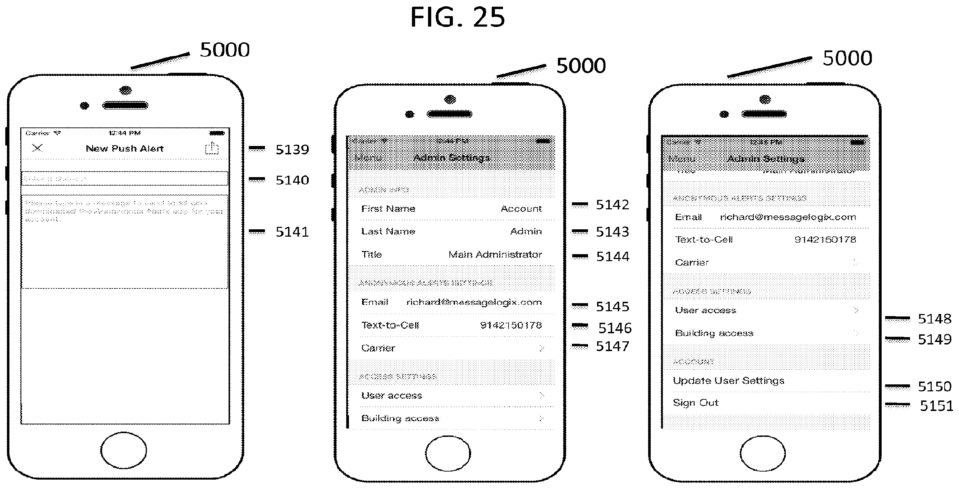

FIG. 25 shows three screens of an app appearing on a Mobile Phone 5000. The first of the three app screens depicted in FIG. 25 shows a button for sending push notifications 5139, and editable text fields for entering the subject of push notifications 5140 and the message of the push notifications 5141. The second of the three app screens depicted in FIG. 25 shows screen areas for displaying the first name of the user 5142, the last name of the user 5143, the title of the user 5144, the email of the user 5145, the phone number of the user 5146, and the user's phone carrier 5147. The third of the three app screens depicted in FIG. 25 shows buttons to display the user access 5148, display the building access 5149, update the user's settings 5150, and sign out 5151.

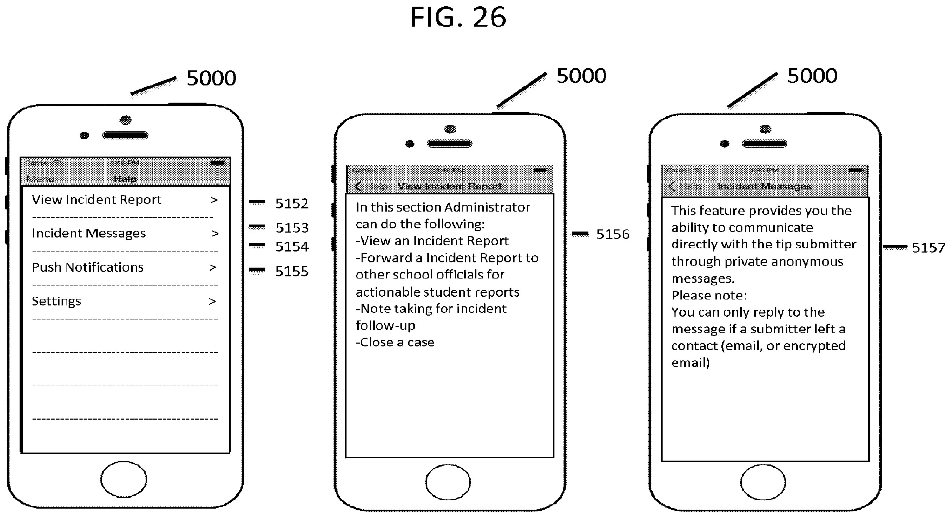

FIG. 26 shows three screens of an app appearing on a Mobile Phone 5000. The first of the three app screens depicted in FIG. 26 shows buttons for accessing instructions about View Incident Report feature 5152, instructions about Incident Messages 5153, instructions about Push Notifications 5154, and instructions about Settings 5155. The second of the three app screens depicted in FIG. 26 shows non editable text of instructions about Viewing Incident Report 5156. The third of the three app screens depicted in FIG. 26 shows non editable text of instructions about Settings 5157.

In at least one embodiment, the application flow is as follows: A Submitter presses Smart Button icon/button to activate SmartButton. Legal information (not shown in drawings) appears informing the user that said user must agree to (only first time use) terms that state that the user will not abuse the app or use it for false reporting, and that the My Identity information will not be linked to Anonymous Alerts reporting, among other terms. A User clicks on Smart Button. After pressing the Smart Button, the GPS status is checked and verified. If GPS is turned off, user gets a prompt to go to settings and turn on GPS location. If GPS is turned on, "My Identity" 5006 information is checked. If "My Identity" information is not filled out a prompt appears asking "Do you want to remain anonymous or fill out more information?". If the selection is yes, a prompt appears saying "Select ORANGE" [not shown in drawing] smart button again to submit additional information below" and additional information, such as "reveal your name (optional)", "Select School (optional)", "Select incident type (optional), and/or "push alert to social media (optional)", appear. If the selection is no, no more prompts appear. If the "My Identity" information is filled out an alert will be sent to contacts saved under "My Identity" profile page with all the Identity information already filled out, and a prompt will appear only for user to "Select incident type (optional)". User can fill out "My Identity" page at any time and can fill out their name, school, add a picture, add social media, and add contacts. The Smart Button will be GREY when user is unable to press button in 3-5 minute time out.

While the instant invention has been shown and described in accordance with preferred and practical embodiments thereof, it is recognized that departures from the instant disclosure are contemplated within the scope of the invention as defined by the claims. Therefore, the true scope of the invention should not be limited since other modifications will become apparent to those skilled in the art upon a study of the claims, drawings, descriptions, explanations, and specifications herein.

### COMPONENT LIST FOR DRAWINGS

Following is a partial list of the components depicted in the drawings:

| Component Number | Component Description |
|---|---|
| 1 | Student |
| 3 | Parent |
| 6 | Staff/Authorized Parties |
| 7 | Other Submitter(s) |
| 9 | Resident/Community Member |
| 12 | Information/Content |
| 15 | Server |
| 18 | Database (includes Content Data 19 + Receiver Unique Identifier 20) |
| 19 | Content Data |
| 20 | Receiver Unique Identifier |
| 21 | Content Unique Identifier 22 + Receiver Unique Identifier 20 |
| 22 | Content Unique Identifier |
| 24 | Receiver Unique Identifier 20 + Geographic Code ID 203 |
| 27 | Superintendent |
| 30 | Principal |
| 33 | Counselor |
| 34 | Other Receiver(s) |
| 36 | Law Enforcement |
| 37 | System |
| 39 | Cloud (includes one or more of the following: Internet, a virtual network, social network, world wide web, WAN, and/or LAN) |
| 42 | Message Window |
| 43 | Translation |
| 44 | School Building |
| 45 | Person(s) to Contact |
| 48 | Priority |
| 51 | Incident Type |
| 52 | Locations |
| 53 | Download iPhone App |
| 54 | Message |
| 56 | Add photo/image/video/sound |
| 57 | "1-Step Submit" or "Submit" |
| 59 | Upload |
| 60 | Message submitter (anonymous identity) receives a unique identifier and confirmation from system |
| 61 | Submit / Cancel |
| 63 | Message submitter receives a unique identifier to contact the school about message without providing identity |
| 64 | Choose File or Cancel |
| 66 | Message submitter has option to provide an e-mail address and/or other information that submitter decides to encrypt or not |
| 67 | Crop |
| 68 | Open |
| 69 | Message submitter enters e-mail and/or other information and clicks SUBMIT |
| 72 | Admin Logs in to System Account |
| 75 | Admin clicks Account on Menu bar |
| 78 | Admin enters the new user's: name / title |
| 81 | Admin determines type of notification person will receive |
| 84 | Admin enters the new user's: E-mail address / Text to Cell number / Phone Number |
| 87 | Logs in |
| 90 | Selects Anonymous Alerts from Campaign Track or reporting system |
| 93 | Data Range / Message Type |
| 96 | System runs Query |
| 99 | Chooses message option |
| 102 | View message history with timestamp |
| 105 | Forward message via e-mail to another person |
| 111 | Message Receiver / Message Recipient OPTION 2 REPLY TO MESSAGE PROCESS |
| 114 | System opens new window with text box |
| 117 | Clicks "1-Step Submit" or "Submit" |
| 203 | Geographic Code ID |
| 510 | Receiver(s) |
| 520 | Submitter(s) |
| 530 | Cloud (includes one or more of the following: Internet, a virtual network, social network, world wide web, WAN, and/or LAN) |
| 540 | Server |
| 545 | Database |
| 550 | System Administrator |
| 560 | 3rd Party Forwarding |
| 570 | Input Output Devices |
| 575 | Collective Memory |
| 581 | Logging Processor |
| 582 | Unique Identifier Engine |
| 583 | Unique Receiver Identifier Engine |
| 584 | Report Generator |
| 1702 | CPU (Processor) |
| 1704 | Ram |
| 1706 | Removable memory |
| 1708 | Network |
| 1710 | Network interfaces |
| 1712 | Hard disk |
| 1714 | Rom |
| 1716 | Screen |
| 1716A | Visual Keyboard |
| 1718 | Keyboard |
| 1720 | Mouse |
| 1722 | Speakers |
| 1724 | Microphone |
| 5000 | Mobile Phone |
| 5001 | Send Incident Report Menu Button |
| 5002 | Glossary Menu Button |
| 5003 | Help Menu Button |
| 5004 | Notifications Menu Button |
| 5005 | Smart Button Menu Button |
| 5006 | Smart Button/Locate Menu Button |
| 5007 | Reveal Your Name Menu Button |
| 5008 | Select School Menu Button |
| 5009 | Select Incident Type Menu Button |
| 5010 | My Identity Menu Button |
| 5011 | Reveal Your Name Menu Button |
| 5012 | Add Your Picture Menu Button |
| 5013 | Select Your School Menu Button |
| 5014 | Add Social Media Menu Button |
| 5015 | Add Incident Contacts Menu Button |
| 5016 | Save/Reveal Menu Button |
| 5017 | Name/Logo |
| 5100 | Log Out Menu Button |
| 5101 | View Incident Details Menu Button |
| 5102 | Incident Messages & Replies Menu Button |
| 5103 | Pie Charts Menu Button |
| 5104 | Push Notifications Menu Button |
| 5105 | Settings Menu Button |
| 5106 | Help Menu Button |
| 5107 | Pie Charts Menu Button |
| 5108 | All/Open/Closed Status Menu Buttons |
| 5109 | Incident Description Screen |
| 5110 | Exit Menu Button |
| 5111 | Pie Chart |
| 5112 | Refresh Menu Button |
| 5113 | Name of Recipient |
| 5114 | Title of Recipient |
| 5115 | Area of Recipient |
| 5116 | Date of Message |
| 5117 | Type of Message |
| 5118 | Priority Level of Message |
| 5119 | Incident Message |
| 5120 | Confirmation Code of Report |
| 5121 | Status of Report |
| 5122 | Reply Menu Button |
| 5123 | Forward Menu Button |
| 5124 | Add Information Menu Button |
| 5125 | Close Case Menu Button |
| 5126 | Incident Messages & Replies |
| 5127 | Reply Menu Button |
| 5128 | Add Email Menu Button |
| 5129 | Forward Menu Button |
| 5130 | Add Notes and Info |
| 5131 | Credibility Menu Button |
| 5132 | Notes |
| 5133 | Save Information Menu Button |
| 5134 | Number of iOS Devices |
| 5135 | Number of Android Devices |
| 5136 | Total Number of Devices |
| 5137 | Send Push Notifications Menu Button |
| 5138 | View Sent Notifications Menu Button |
| 5139 | Share Menu Button |
| 5140 | Subject |
| 5141 | Message |
| 5142 | First Name of User |
| 5143 | Last Name of User |
| 5144 | Title of User |
| 5145 | User's Email Information |
| 5146 | User's Text-To Cell Information |
| 5147 | User's Carrier Information |
| 5148 | User Access Menu Button |
| 5149 | Building Access Menu Button |
| 5150 | Update User Settings Menu Button |
| 5151 | Sign Out Menu Button |
| 5152 | View Incident Report Menu Button |
| 5153 | Incident Messages Menu Button |
| 5154 | Push Notifications Menu Button |
| 5155 | Settings Menu Button |
| 5156 | View Incident Report Screen |
| 5157 | Incident Messages |

### DEFINITIONS

These definitions are in addition to the words and phrases specifically defined in the body of this application.

Anonymous Alerts: is a registered trademark of Message Logix, Inc., having US Trademark Registration No. 4,306994.

Device: Comprises at least one of electronic device, computer, mobile device, digital scanner, image scanner, scanner, handheld device, reader device, or server.

Digital Scanner, Image Scanner: an electronic device that generates a digital representation of an image for data input to a computer.

Electronic Device: a device that accomplishes its purpose electronically.

Hand-held computing device: a device that can have an operating system (OS), and usually can run various types of application software, known as apps. Most hand held devices can also be equipped with WI-FI, Bluetooth and GPS capabilities that can allow connections to the Internet and other Bluetooth capable devices such as an automobile or a microphone headset. A camera and/or media player feature for video or music files can also be typically found on these devices along with a stable battery power source. Other types of Mobile Devices include tablet computers. As in a personal digital assistant ("PDA"), the input and output are often combined into a touch-screen interface, Smartphones and PDAs Enterprise Digital Assistants may offer integrated data capture devices like barcode, RFID, optical, Optical Character Recognition, and smart card readers.

Internet: includes generically/commonly known internet networks, virtual networks, wide area networks (WAN) and local area networks (LAN).

Message or communication: a generic term used to refer to a communication whether it be made in writing, by voice, by image (photo, picture, etc.) or otherwise, or in any combination thereof.

Mobile Device: is a generic term used to refer to a variety of devices that allow people to access data and information. A Mobile Device (can also be known as a handheld computing device, handheld device, handheld computer or simply handheld) can also be a hand-held computing device, which can have a display screen and can also have a touch input and/or a miniature keyboard.

User Interface: is the means by which a user can communicate with the method of the invention, e.g., a computer, fax, voice prompt, key board, touch pad, phone, mobile device and/or smart device.

Virtual: occurring, relating to, or existing within a virtual reality or for all practical purposes an existence which is possible or inferred.

Unique Identifier: a unique code identifying person(s) and/or group(s) generated through software combined with at least one unique algorithm.

Receiver's Unique Identifier: a unique code identifying receiver(s) (and not Submitter(s)) generated through software combined with at least one unique algorithm.

Host System Administration Device: (located at system host's location) The master system communicating with all central and local systems.

Authorized Person: Any designated person possessing authority to instantiate action based upon data supplied by a Submitter.

Unidentified Submitter: a Submitter who does not wishing to remain anonymous.

Virtual Network: a network occurring, relating to, or existing within a virtual reality

Social Network: a private and/or website or network that enables the connection of any number of users for any number of purposes

LAN: local area networks (LAN).

WAN: wide area networks (WAN).

System Administration Device: (located at client's location) the input device used by the system administrator at any venue or locality.

information/submission from Submitter: information and/or a submission that can then be responded to and/or acted upon.

Submitter: a person who and/or group that submits information.

### Sender: a Submitter

Receiver: a person who and/or group that receives information.

As used herein, the term "Smart Button" is defined as a switch either virtual or physical which is activated accessed and/or utilized by a submitter to initiate and/or continue communication prior, during and/or after an incident or event takes place transmitting the information, data, and/or location of significance and importance to and from the submitter to receiver(s).

As used herein, the term "and/or," when used in a list of two or more items, means that any one of the listed items can be employed by itself, or any combination of two or more of the listed items can be employed. For example, if a device is described as containing components A, B, and/or C, the composition can contain A alone; B alone; C alone; A and B in combination; A and C in combination; B and C in combination; or A, B, and C in combination.

## Claims

1. A computer implemented method for reporting at least one live incident in real-time comprising the following steps:
accessing/activating a touch sensitive "Smart Button" area on a display of a device, including a computer, mobile device, smart device, mobile phone, smart pad, electronic device, smart watch, smart glasses, car play and alike, input device, communication device, touchscreen computing device, portable media player, or tablet wherein accessing/activating a Smart Button is initiated with a user interface by a mouse click, physically pressing a predefined screen area and/or gesture recognition, at least one submitter, which is a user, enters or edits data, adds identity information and/or inputs the incident report to a user interface of the device, the at least one submitter decides a degree of anonymity to select when accessing/activating the touch sensitive "Smart Button" area on a display of the device, from a user interface of the device, connected to at least one of an Internet, a virtual network, a social network, a world wide web, WAN, and LAN;
inputting by the at least one submitter a unique code identifier UCI and a password to activate a Community View and to submit anonymous incident reports to authorized receiver(s) on a log-in screen wherein the UCI identifies a community the at least one submitter wants to communicate with or is located in or near;
wherein the UCI determines or establishes permissions for locating the specific community and its location;
submitting the UCI to at least one authorized person(s) and/or administrator(s) to disseminate the UCI
within the community and surrounding areas so the UCI can be utilized by the at least one submitter and/or group(s) in or near the community for sending an anonymous incident report to a specified authorized receiver(s) or receiver group(s);
said accessing/activating of a Smart Button further initiates the following steps:
accessing, inputting and/or submitting at least one custom standardized template;
wherein the at least one submitter can enter and/or select from a dropdown menu the incident report or event details, name, e-mail address, phone number, school or
organization, photo, audio, video, alias, or other identifying information associated with the at least one submitter;
typing a custom message within a data entry field within the custom standardized template;
manually turning on GPS location services if not currently available with one click and/or
interaction with a touchscreen;
adding the at least one submitter's picture to save and transmit if the at least one submitter does not want to be anonymous;
creating reports of the incident report for the at least one administrator and/or authorized receiver(s);
sending notification of the reports of the incident report from the at least one submitter to the authorized receiver(s) via text, email, voice and/or push mobile notification;
wherein, when the at least one administrator or authorized receiver views or accesses a report, a map is displayed with the GPS location of the at least one submitter.

2. The method of claim 1, further comprising at least one of the following steps:
further comprising the creation, access, utilizing, of a group to be displayed within a drop-down menu and/or list comprising at least one authorized person to be contacted; wherein said at least one custom standardized template includes a drop-down list for selecting at least one type of event or incident communication;
further comprising a step wherein at least one administrator or receiver can view or access a report, map, graph, and/or table and is displayed with the GPS location of at least one submitter;
further comprising the emitting of a custom sound, light, vibration to be received and acted upon by at least one administrator or receiver;
further comprising a step whereby the location of at least one submitter is tracked using at least one map locator;
wherein said at least one custom standardized template includes a drop-down list and/or other selectable switch, button, or interface for at least one submitter sending or displaying Incident Report, Glossary, Help, Notification, Smart Button or other information.

3. The method of claim 1, further comprising at least one of the following steps:
where said accessing/activating of the Smart Button of Claim 1 for the purpose of transmitting location, causes the at least one submitter's device to be located in a position for employing Global Positioning Systems (GPS), IP location,
proximity to at least one cell tower, proximity to at least one WiFi and/or other signal, Radio Frequency Identification (RFID) tagging, Near Field Communications, infrared, radio frequency, establishing prior known location and/or association with at least one known location;
wherein said Notification is the receipt through the device of push notifications and other information relating to among other things counseling, time sensitive or goodwill messages to at least one submitter(s).

4. The method of claim 1, wherein the incident report is carried forth via at least one of the following: 2-way text-to-cell communication, 2-way voice communication, 2-way Social Media communications, 2-way texting, 2-way phone, 2-way SMS or MMS, 2-way communication, 2-way chat, about information, and, when Notification is through push notifications, the 2-way communication Push Notifications is between the at least one submitter(s) and the at least one receiver(s).

5. The method of claim 1, wherein the at least one submitter may submit information from said incident report from Claim 1, as at least one incident message via at least one user interface on a display of the device using at least one custom standardized template on at least one of a mobile device, smartpad, electronic device, mobile phone, input device, communication device, tablet, computer, fax, facsimile machine, phone, smart device and/or smartphone.

6. The method of claim 1, further comprising at least one of the following steps:
inputting the communication being sent from the at least one submitter utilizing at least one of the custom standardized template(s);
utilizing an icon on a display of the smart device to send the at least one submitter communication to a data server using a unique identifier.

## Patentansprüche

1. Computerimplementiertes Verfahren zum Melden mindestens eines Live-Ereignisses in Echtzeit, umfassend die folgenden Schritte:
Zugreifen auf/Aktivieren eines berührungsempfindlichen "Smart-Button"-Bereichs auf einer Anzeige einer Vorrichtung, einschließlich eines Computers, mobilen Geräts, Smart-Geräts, Mobiltelefons, Smartpads, einer elektronischen Vorrichtung, Smartwatch, Smartbrille, eines Car-Play-Systems und dergleichen, einer Eingabevorrichtung, Kommunikationsvorrichtung, Touchscreen-Computing-Vorrichtung, eines tragbaren Medien-Players oder Tablets, wobei das Zugreifen auf/Aktivieren eines Smart Buttons mit einer Benutzerschnittstelle durch einen Mausklick, durch physisches Drücken eines vordefinierten Bildschirmbereichs und/oder durch Gestenerkennung eingeleitet wird;
mindestens ein Einreicher, welcher ein Benutzer ist, Daten eingibt oder bearbeitet, Identitätsinformationen hinzufügt und/oder den Eregnisbericht in eine Benutzerschnittstelle der Vorrichtung eingibt,
der mindestens eine Einreicher einen Grad an Anonymität, der beim Zugreifen auf/Aktivieren des berührungsempfindlichen "Smart-Button"-Bereichs auf einer Anzeige der Vorrichtung auszuwählen ist, aus einer Benutzerschnittstelle der Vorrichtung bestimmt, die mit mindestens einem von einem Internet, einem virtuellen Netzwerk, einem sozialen Netzwerk, einem World Wide Web, einem WAN und einem LAN verbunden ist;
Eingeben einer eindeutigen Codekennung (UCI) und eines Passworts durch den mindestens einen Einreicher, um eine Gemeinschaftsansicht zu aktivieren und anonyme Eregnisberichte an einen autorisierten/an autorisierte Empfänger auf einem Anmeldebildschirm einzureichen, wobei die UCI eine Gemeinschaft identifiziert, mit der der mindestens eine Einreicher kommunizieren möchte oder in der bzw. in deren Nähe sich der mindestens eine Einreicher befindet;
wobei die UCI Berechtigungen zum Auffinden der spezifischen Gemeinschaft und deren Ort bestimmt oder festlegt;
Einreichen der UCI an mindestens eine autorisierte Person oder an autorisierte Personen und/oder an mindestens einen Administrator oder an Administratoren, um die UCI innerhalb der Gemeinschaft und der umgebenden Bereiche zu verbreiten, sodass die UCI durch den mindestens einen Einreicher und/oder eine Gruppe/Gruppen in oder in der Nähe der Gemeinschaft genutzt werden kann, um einen anonymen Eregnisbericht an einen spezifizierten autorisierten Empfänger/an spezifizierte autorisierte Empfänger oder an eine Empfängergruppe/an Empfängergruppen zu senden;
wobei das Zugreifen auf/Aktivieren eines Smart Buttons ferner die folgenden Schritte einleitet:
Zugreifen auf, Eingeben und/oder Einreichen mindestens einer benutzerdefinierten standardisierten Vorlage;
wobei der mindestens eine Einreicher den Eregnisbericht oder Vorfall-Details, Namen, E-Mail-Adresse, Telefonnummer, Schule oder Organisation, Foto, Audio, Video, Alias oder sonstige mit dem mindestens einen Einreicher assoziierte Identifikationsinformationen eingeben und/oder sie aus einem Dropdown-Menü auswählen kann;
Eintippen einer benutzerdefinierten Nachricht innerhalb eines Dateneingabefeldes innerhalb der benutzerdefinierten standardisierten Vorlage;
manuelles Einschalten von GPS-Ortungsdiensten mit einem Klick und/oder einer Interaktion mit einem Touchscreen, falls diese derzeit nicht verfügbar sind;
Hinzufügen des Bildes des mindestens einen Einreichers zum Speichern und Übermitteln, falls der mindestens eine Einreicher nicht anonym bleiben möchte;
Erstellen von Berichten des Eregnisberichts für den mindestens einen Administrator und/oder den autorisierten Empfänger/die autorisierten Empfänger;
Senden einer Benachrichtigung über die Berichte des Eregnisberichts von dem mindestens einen Einreicher an den autorisierten Empfänger/die autorisierten Empfänger mittels Textnachricht, E-Mail, Sprache und/oder mobiler Push-Benachrichtigung;
wobei, wenn der mindestens eine Administrator oder autorisierte Empfänger einen Bericht ansieht oder auf diesen zugreift, eine Karte mit dem GPS-Ort des mindestens einen Einreichers angezeigt wird.

2. Verfahren nach Anspruch 1, ferner umfassend mindestens einen der folgenden Schritte:
ferner umfassend das Erstellen, Zugreifen auf und Nutzen einer Gruppe, die innerhalb eines Dropdown-Menüs und/oder einer Liste angezeigt wird, umfassend mindestens eine zu kontaktierende autorisierte Person;
wobei die mindestens eine benutzerdefinierte standardisierte Vorlage eine Dropdown-Liste zur Auswahl mindestens eines Typs von Vorfall- oder Eregniskommunikation einschließt;
ferner umfassend einen Schritt, bei dem mindestens ein Administrator oder Empfänger einen Bericht, eine Karte, ein Diagramm und/oder eine Tabelle ansehen oder auf diese zugreifen kann und mit dem GPS-Ort mindestens eines Einreichers angezeigt wird;
ferner umfassend das Ausgeben eines benutzerdefinierten Tons, Lichts und/oder einer Vibration, die von mindestens einem Administrator oder Empfänger empfangen und auf die reagiert werden soll;
ferner umfassend einen Schritt, durch den der Ort von mindestens einem Einreicher unter Verwendung von mindestens einem Karten-Lokalisierer verfolgt wird;
wobei die mindestens eine benutzerdefinierte standardisierte Vorlage eine Dropdown-Liste und/oder einen anderen auswählbaren Schalter, Button oder eine Schnittstelle für das Senden oder Anzeigen eines Eregnisberichts, Glossars, einer Hilfe, Benachrichtigung, eines Smart Buttons oder anderer Informationen durch den mindestens einen Einreicher einschließt.

3. Verfahren nach Anspruch 1, ferner umfassend mindestens einen der folgenden Schritte:
wobei das Zugreifen auf/Aktivieren des Smart Buttons nach Anspruch 1 zum Zwecke der Ortübermittlung bewirkt, dass sich die Vorrichtung des mindestens einen Einreichers in einer Position befindet, an der Global Positioning-Systeme (GPS), IP-Ortung, Nähe zu mindestens einem Mobilfunkmast, Nähe zu mindestens einem WLAN- und/oder anderen Signal, Radio Frequency Identification (RFID)-Markierung, Nahfeldkommunikation, Infrarot, Funkfrequenz, Festlegen eines zuvor bekannten Orts und/oder Zuordnung zu mindestens einem bekannten Ort eingesetzt werden können;
wobei die Benachrichtigung den Empfang von Push-Benachrichtigungen und anderen Informationen bezüglich unter anderem Beratung, zeitkritischer Nachrichten oder Goodwill-Nachrichten für mindestens einen Einreicher/für Einreicher über die Vorrichtung umfasst.

4. Verfahren nach Anspruch 1, wobei der Eregnisbericht über mindestens eines der folgenden Mittel fortgesetzt wird: bidirektionale Text-zu-Mobiltelefon-Kommunikation, bidirektionale Sprachkommunikation, bidirektionale Social-Media-Kommunikationen, bidirektionales Text-Messaging, bidirektionale Telefonkommunikation, bidirektionale SMS- oder MMS-Kommunikation, bidirektionale Kommunikation, bidirektionaler Chat, über Informationen, und wenn die Benachrichtigung durch Push-Benachrichtigungen erfolgt, erfolgt die bidirektionale Kommunikation mittels Push-Benachrichtigungen zwischen dem mindestens einen Einreicher/den Einreichern und dem mindestens einen Empfänger/den Empfängern.

5. Verfahren nach Anspruch 1, wobei der mindestens eine Einreicher Informationen aus dem Eregnisbericht gemäß Anspruch 1 als mindestens eine Eregnisnachricht über mindestens eine Benutzerschnittstelle auf einer Anzeige der Vorrichtung unter Verwendung mindestens einer benutzerdefinierten standardisierten Vorlage auf mindestens einem mobilen Gerät, Smartpad, einer elektronischen Vorrichtung, einem Mobiltelefon, einer Eingabevorrichtung, Kommunikationsvorrichtung, einem Tablet, Computer, Faxgerät, Telefongerät, Smart-Gerät und/oder Smartphone einreichen kann.

6. Verfahren nach Anspruch 1, ferner umfassend mindestens einen der folgenden Schritte:
Eingeben der zu sendenden Kommunikation durch den mindestens einen Einreicher unter Nutzung mindestens einer der benutzerdefinierten standardisierten Vorlage/n;
Nutzen eines Symbols auf einer Anzeige des Smart-Geräts zum Senden der Kommunikation des mindestens einen Einreichers an einen Datenserver unter Verwendung einer eindeutigen Kennung.

## Revendications

1. Procédé mis en œuvre par ordinateur pour rapporter au moins un incident en cours en temps réel, comprenant les étapes suivantes :
accéder à/activer une zone tactile de « Smart Button » (bouton intelligent) sur un écran d'un appareil, notamment un ordinateur, un appareil mobile, un appareil intelligent, un téléphone portable, une tablette intelligente, un appareil électronique, une montre connectée, des lunettes connectées, CarPlay et autres systèmes similaires, un périphérique d'entrée, un appareil de communication, un appareil informatique à écran tactile, un lecteur multimédia portable ou une tablette, dans lequel l'accès à/l'activation d'un bouton intelligent est déclenché via une interface utilisateur par un clic de souris, une pression physique sur une zone d'écran prédéfinie et/ou la reconnaissance gestuelle,
au moins un alerteur, qui est un utilisateur, entre ou modifie des données, ajoute des informations d'identité et/ou saisit le rapport d'incident dans une interface utilisateur de l'appareil,
l'au moins un alerteur décide du degré d'anonymat à sélectionner lorsqu'il accède à/active la zone tactile du bouton intelligent sur un écran de l'appareil, à partir d'une interface utilisateur de l'appareil, connecté à au moins l'un des réseaux suivants : Internet, un réseau virtuel, un réseau social, le Web, un réseau étendu, WAN, ou un réseau local, LAN ;
saisir, par l'au moins un alerteur, un code unique d'identification UCI et un mot de passe pour activer un « avis de la communauté » et soumettre des rapports d'incident anonymes à un ou des récepteurs autorisés sur un écran de connexion, dans lequel l'UCI identifie une communauté avec laquelle l'au moins un alerteur souhaite communiquer ou dans laquelle il se trouve ou à proximité de laquelle il se trouve ;
dans lequel l'UCI détermine ou établit les autorisations nécessaires pour localiser la communauté spécifique et sa localisation ;
soumettre l'UCI à au moins une ou plusieurs personnes et/ou un ou plusieurs administrateurs autorisés afin de diffuser l'UCI au sein de la communauté et dans les zones environnantes, de sorte que l'UCI puisse être utilisé par l'au moins un alerteur et/ou un ou plusieurs groupes situés dans ou à proximité de la communauté pour envoyer un rapport d'incident anonyme à un ou plusieurs récepteurs ou à un ou plusieurs groupes de récepteurs autorisés spécifiés ;
ledit accès à/ladite activation d'un bouton intelligent déclenche en outre les étapes suivantes :
accéder à, saisir et/ou soumettre au moins un modèle standardisé personnalisé ;
dans lequel l'au moins un alerteur peut entrer et/ou sélectionner dans un menu déroulant le rapport d'incident ou les détails de l'événement, le nom, l'adresse e-mail, le numéro de téléphone, l'établissement scolaire ou l'organisation, une photo, un fichier audio, une vidéo, un pseudonyme ou toute autre information d'identification associée à l'au moins un alerteur ;
taper un message personnalisé dans un champ de saisie de données au sein du modèle standardisé personnalisé ;
activer manuellement les services de localisation GPS s'ils ne sont pas actuellement disponibles, d'un simple clic et/ou par interaction avec un écran tactile ;
ajouter la photo de l'au moins un alerteur afin de l'enregistrer et de la transmettre si l'au moins un alerteur ne souhaite pas rester anonyme ;
créer des rapports relatifs au rapport d'incident à l'intention de l'au moins un administrateur et/ou du ou
des récepteurs autorisés ;
envoyer une notification des rapports du rapport d'incident provenant de l'au moins un alerteur au(x) récepteur(s) autorisé(s) par SMS, e-mail, message vocal et/ou notification poussée sur mobile ;
dans lequel, lorsqu'au moins un administrateur ou récepteur autorisé consulte ou accède à un rapport, une carte s'affiche indiquant la localisation GPS de l'au moins un alerteur.

2. Procédé selon la revendication 1, comprenant en outre au moins l'une des étapes suivantes :
comprendre en outre la création, l'accès et l'utilisation d'un groupe à afficher dans un menu et/ou une liste déroulante comprenant au moins une personne autorisée à contacter ;
dans lequel ledit au moins un modèle standardisé personnalisé inclut une liste déroulante permettant de sélectionner au moins un type de communication relative à un événement ou à un incident ;
comprendre en outre une étape dans laquelle au moins un administrateur ou récepteur peut consulter ou accéder à un rapport, une carte, un graphique et/ou un tableau, et où s'affiche la localisation GPS d'au moins un alerteur ;
comprendre en outre l'émission d'un son, d'une lumière ou d'une vibration personnalisés destinés à être reçus et à déclencher une action de la part d'au moins un administrateur ou récepteur ;
comprendre en outre une étape par laquelle la localisation d'au moins un alerteur est suivie à l'aide d'au moins un localisateur cartographique ;
dans lequel ledit au moins un modèle standardisé personnalisé inclut une liste déroulante et/ou tout autre commutateur, bouton ou interface sélectionnable permettant à au moins un alerteur d'envoyer ou d'afficher un rapport d'incident, un glossaire, une aide, une notification, un bouton intelligent ou toute autre information.

3. Procédé selon la revendication 1, comprenant en outre au moins l'une des étapes suivantes :
où ledit accès au/ladite activation du bouton intelligent selon la revendication 1, dans le but de transmettre une localisation, fait en sorte que l'au moins un appareil de l'alerteur se trouve dans une localisation qui permet d'utiliser les systèmes de localisation global (GPS), la localisation IP, la proximité d'au moins une antenne-relais, la proximité d'au moins un signal Wi-Fi et/ou d'un autre signal, l'étiquetage par identification par radiofréquence (RFID), la communication en champ proche, l'infrarouge, les radiofréquences, l'établissement d'une localisation connue antérieure et/ou d'une association avec au moins une localisation connue ;
dans lequel ladite notification consiste en la réception, via l'appareil, de notifications poussées et d'autres informations relatives, entre autres, à des conseils, à des messages urgents ou de bonne volonté destinés à au moins un ou plusieurs alerteurs.

4. Procédé selon la revendication 1, dans lequel le rapport d'incident est transmis via au moins l'un des moyens suivants : communication bidirectionnelle par SMS vers un téléphone portable, communication vocale bidirectionnelle, communications bidirectionnelles sur les réseaux sociaux, envoi bidirectionnel de SMS, téléphone bidirectionnel, SMS ou MMS bidirectionnels, communication bidirectionnelle, chat bidirectionnel, concernant des informations, et, lorsque la notification s'effectue par le biais de notifications poussées, la communication bidirectionnelle par notifications poussées s'établit entre l'au moins un alerteur ou les alerteurs et l'au moins un récepteur ou les récepteurs.

5. Procédé selon la revendication 1, dans lequel l'au moins un alerteur peut soumettre les informations tirées dudit rapport d'incident selon la revendication 1, comme étant au moins un message d'incident via au moins une interface utilisateur sur un écran de l'appareil, en utilisant au moins un modèle standardisé personnalisé sur au moins l'un des appareils suivants : appareil mobile, tablette intelligente, appareil électronique, téléphone mobile, périphérique d'entrée, appareil de communication, tablette, ordinateur, fax, télécopieur, téléphone, appareil intelligent et/ou smartphone.

6. Procédé selon la revendication 1, comprenant en outre au moins l'une des étapes suivantes :
saisir la communication étant envoyée par l'au moins un alerteur en utilisant au moins l'un des modèles standardisés personnalisés ;
utiliser une icône sur un écran de l'appareil intelligent pour envoyer l'au moins une communication de l'alerteur à un serveur de données à l'aide d'un identifiant unique.
